# EUROPEAN PATENT APPLICATION

(11) **EP 4 425 606 A1**
(43) Date of publication of application: **04.09.2024**
(21) Application number: 22939191.7
(22) Date of filing: 29.04.2022
(51) Int. Cl.: H01M 4/36, H01M 10/0567

(54) **SECONDARY BATTERY AND BATTERY MODULE, BATTERY PACK AND ELECTRIC DEVICE COMPRISING SAME**

(71) Applicant: Contemporary Amperex Technology Co., Limited, Ningde, Fujian 352100 (CN)
(72) Inventor: ZHANG, Limei, Ningde, Fujian 352100 (CN); CHEN, Peipei, Ningde, Fujian 352100 (CN); JIANG, Yao, Ningde, Fujian 352100 (CN); LIU, Jiao, Ningde, Fujian 352100 (CN)
(74) Representative: Gong, Jinping
(86) International application number: PCT/CN2022/090209
(87) International publication number: WO 2023/206342

(57) **Abstract**

The present application provides a secondary battery and a battery module, battery pack and electrical device containing the same. The secondary battery comprises a positive electrode plate and an non-aqueous electrolytic solution, wherein the positive electrode plate comprises a positive electrode active material with a core-shell structure, said positive electrode active material comprising an core and a shell covering said core, said core comprises Li₁₊ₓMn_{1-y}A_{y}P_{1-z}R_{z}O₄;
said shell comprises a first cladding layer covering said core and a second cladding layer covering said first cladding layer, said non-aqueous electrolytic solution comprises a first additive, said first additive comprises one or more of compounds as shown by Formula 1, Formula 2 and Formula 3. The present application enables the secondary battery to have higher energy density while having good rate performance, cycle performance, storage performance and safety performance.

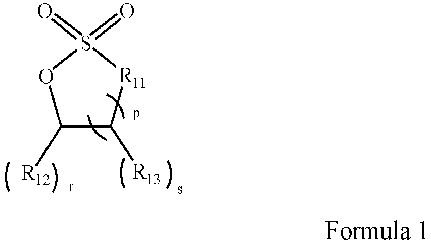

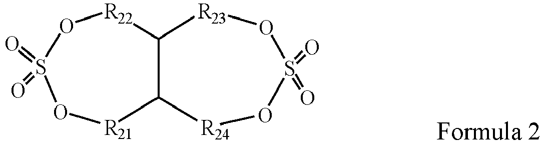

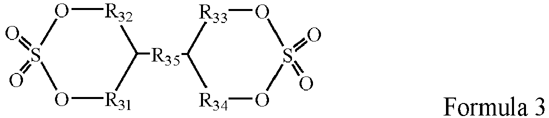

## Description

### TECHNICAL FIELD

The present application belongs to the technical field of battery, in particular to a secondary battery and a battery module, a battery pack and an electrical device containing the same.

### BACKGROUND

In recent years, secondary batteries have been widely used in energy storage power systems such as hydro, thermal, wind and solar power plants, as well as electric tools, electric bicycles, electric motorcycles, electric vehicles, military equipment, aerospace and many other fields. With the application and promotion of secondary batteries, their safety performances are receiving more and more attention. Lithium manganese phosphate has become one of the most popular positive electrode active materials due to its high capacity, good safety performance and abundant raw material sources; however, lithium manganese phosphate is prone to manganese ion leaching out during charging, resulting in rapid capacity decay, thereby constraining its commercialization.

### SUMMARY

An object of the present application is to provide a secondary battery and a battery module, a battery pack and an electrical device containing the same, aiming to enable the secondary battery to have a relatively high energy density, and a good rate performance, cycle performance, storage performance and safety performance.

A first aspect of the present application provides a secondary battery, comprising a positive electrode plate and an non-aqueous electrolytic solution, wherein
the positive electrode plate comprises a positive electrode active material with a core-shell structure, in which said positive electrode active material comprises an core and a shell covering said core, said core comprises Li₁₊ₓMn_{1-y}A_{y}P_{1-z}R_{z}O₄, x is in the range of -0.100 to 0.100, y is in the range of 0.001 to 0.500, z is in the range of 0.001 to 0.100, said A comprises one or more elements selected from Zn, Al, Na, K, Mg, Mo, W, Ti, V, Zr, Fe, Ni, Co, Ga, Sn, Sb, Nb, and Ge, optionally one or more elements selected from Fe, Ti, V, Ni, Co and Mg, said R comprises one or more elements selected from B, Si, N and S;
said shell comprises a first cladding layer covering said core and a second cladding layer covering said first cladding layer,
   said first cladding layer comprises pyrophosphate MP₂O₇ and phosphate XPO₄, said M and X each independently comprises one or more elements selected from Li, Fe, Ni, Mg, Co, Cu, Zn, Ti, Ag, Zr, Nb, and Al, and
   said second cladding layer comprises carbon;
said non-aqueous electrolytic solution comprises a first additive that comprises one or more of compounds as shown by Formula 1, Formula 2 and Formula 3, 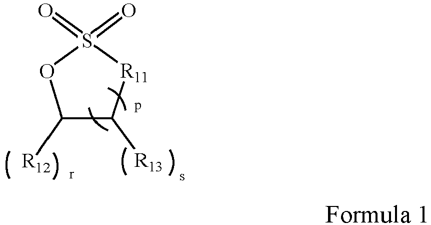 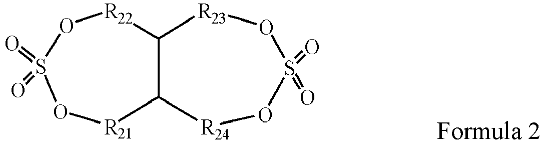 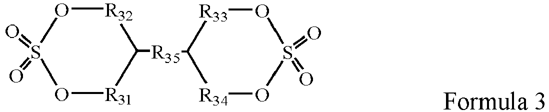 in which,
   p represents 1, 2 or 3, r represents 1 or 2, s represents 1 or 2,
   R₁₁ represents an oxygen atom or C(Y¹)₂, Y¹ independently represents one of a hydrogen atom, a halogen atom, C1-C6 alkyl, C1-C6 haloalkyl, C1-C6 alkoxy, and C1-C6 haloalkoxy,
   R₁₂ each independently represents one of a hydrogen atom, a halogen atom, C1-C6 alkyl, C1-C6 haloalkyl, C1-C6 alkoxy, and C1-C6 haloalkoxy,
   R₁₃ each independently represents one of a hydrogen atom, a halogen atom, C1-C6 alkyl group, C1-C6 haloalkyl group, C1-C6 alkoxy group, and C1-C6 haloalkoxy group,
   R₂₁, R₂₂, R₂₃, R₂₄ each independently represent a single bond or C(Y²)₂, and Y² each independently represents one of a hydrogen atom, a halogen atom, C1-C6 alkyl, C1-C6 haloalkyl, C1-C6 alkoxy, and C1-C6 haloalkoxy,
   R₃₁, R₃₂, R₃₃, R₃₄ each independently represent a single bond or C(Y³)₂, and Y³ each independently represents one of a hydrogen atom, a halogen atom, C1-C6 alkyl, C1-C6 haloalkyl, C1-C6 alkoxy, and C1-C6 haloalkoxy, and
   R₃₅ is absent or represents one of a single bond, an oxygen atom, C1-C6 alkylene, C1-C6 haloalkylene, C1-C6 oxa-alkylene.

In the present application, by doping lithium manganese phosphate with specific elements and subjecting to surface cladding, it is allowed to effectively reduce leaching out of manganese ions in the process of intercalation-deintercalation of lithium while promoting migration of lithium ions, thereby improving a rate performance, cycle performance, storage performance and safety performance of the secondary battery.

When the non-aqueous electrolytic solution contains the first additive shown in the above Formula 1, Formula 2, and Formula 3, it is capable of forming a layer of a sulfur-containing polymer with strong lithium ion conductivity on the surface of the positive electrode active material during a charge process of the secondary battery, so as to enhance lithium ion conductivity of the positive electrode active material, and thereby further enhance capacity exertion and rate performance of the secondary battery.

In addition, the first additive can also coordinate with transition metals on the surface of the positive electrode active material and form a complex, so that interfacial film formed on the surface of the positive electrode active material is more dense and stable, thereby further reducing interfacial side reactions between the positive electrode active material and the non-aqueous electrolytic solution, further reducing leaching out of the manganese ions, and reducing gas production. Since the first additive has a high reduction potential, it can also accept electrons from a negative electrode during a charge process and reduce itself, and preferentially form a dense and stable interfacial film on the surface of the negative electrode active material over an organic solvent, thereby reducing interfacial side reactions between the negative electrode active material and the non-aqueous electrolytic solution.

Therefore, the secondary battery of the present application is capable of simultaneously combining a high energy density with a good rate performance, cycle performance, storage performance, and safety performance.

In any embodiment of the present application, said compound shown in Formula 1 satisfies at least one of the following conditions (1) to (4):
(1) p represents 1 or 2,
(2) R₁₁ represents an oxygen atom or C(Y¹)₂, with Y¹ independently representing one of a hydrogen atom, a fluorine atom, methyl, ethyl, propyl, fluorinated methyl, fluorinated ethyl, fluorinated propyl, methoxy, ethoxy, and propoxy,
(3) R₁₂ each independently represents one of a hydrogen atom, a fluorine atom, methyl, ethyl, propyl, fluorinated methyl, fluorinated ethyl, fluorinated propyl, methoxy, ethoxy, and propoxy, and
(4) R₁₃ each independently represents one of a hydrogen atom, a fluorine atom, methyl, ethyl, propyl, fluorinated methyl, fluorinated ethyl, fluorinated propyl, methoxy, ethoxy, and propoxy.

In any embodiment of the present application, said compound shown in formula 2 satisfies at least one of the following conditions (5) to (7):
(5) R₂₁, R₂₂, R₂₃, R₂₄ independently represent a single bond or methylene,
(6) R₂₁, R₂₂, R₂₃, and R₂₄ are not all a single bond, and
(7) one or both of R₂₁, R₂₂ are methylene, and one or both of R₂₃, R₂₄ are methylene.

In any embodiment of the present application, said compound shown in formula 3 satisfies at least one of the following conditions (8) to (10):
(8) R₃₁, R₃₂, R₃₃, and R₃₄ independently represent a single bond or methylene, and R₃₁, R₃₂, R₃₃, and R₃₄ are not all a single bond,
(9) R₃₅ is absent or represents one of a single bond, an oxygen atom, methylene, ethylene, propylene, fluorinated methylene, fluorinated ethylene, fluorinated propylene, 2-oxa-1,3-propylene, 2-oxa-1,4-butylene, 3-oxa-1,5-pentylene, and
(10) R₃₅ is absent or represents one of a single bond, methylene, ethylene, propylene, 2-oxa-1,3 -propylene.

In any embodiment of the present application, R₃₁, R₃₂, R₃₃, R₃₄, and R₃₅ satisfy any one of the following conditions (1) to (6):
(1) R₃₅ is a single bond, one or both of R₃₁ and R₃₂ are methylene, and the remaining substituents are a single bond,
(2) R₃₅ is a single bond, one or both of R₃₃ and R₃₄ are methylene, and the remaining substituents are a single bond,
(3) R₃₅ is a single bond, one of R₃₁ and R₃₂ is methylene, one of R₃₃ and R₃₄ is methylene, and the remaining substituents are a single bond,
(4) R₃₅ is a single bond, one of R₃₁ and R₃₂ is methylene, one of R₃₃ and R₃₄ is methylene, and the remaining substituents are a single bond,
(5) R₃₅ is a single bond, R₃₃ and R₃₄ are both methylene, one of R₃₁ and R₃₂ is methylene, and the remaining substituents are a single bond, and
(6) R₃₅ is a single bond, R₃₁, R₃₂, R₃₃, R₃₄ are all methylene.

In any embodiment of the present application, said first additive comprises at least one of the following compounds:

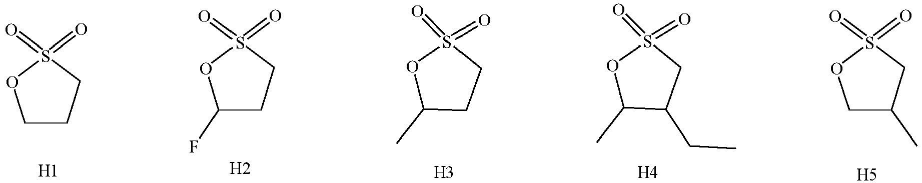

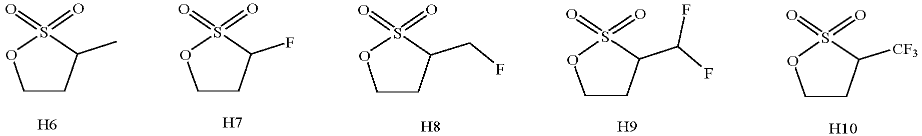

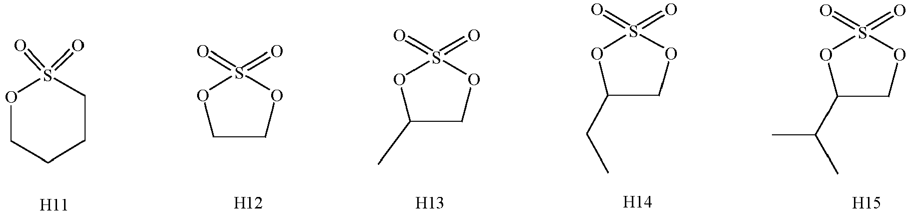

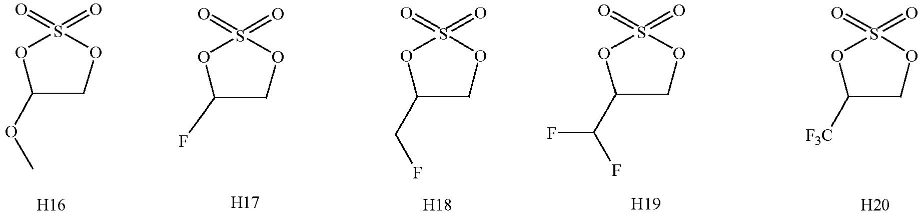

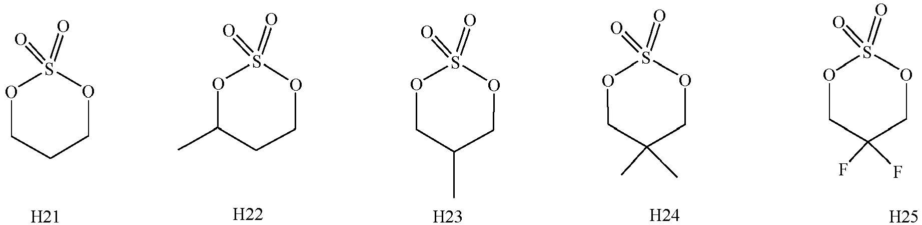

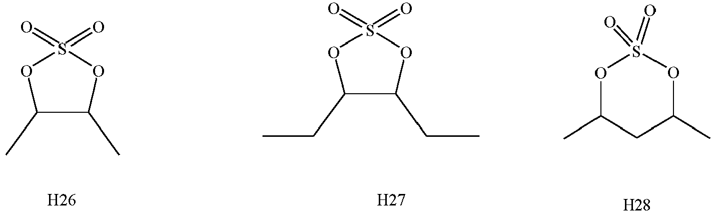

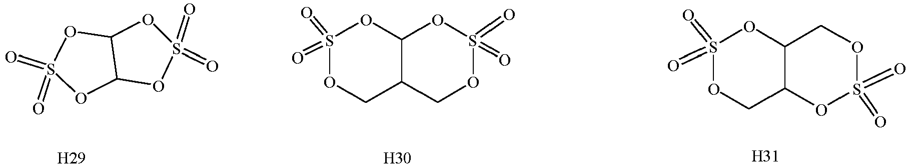

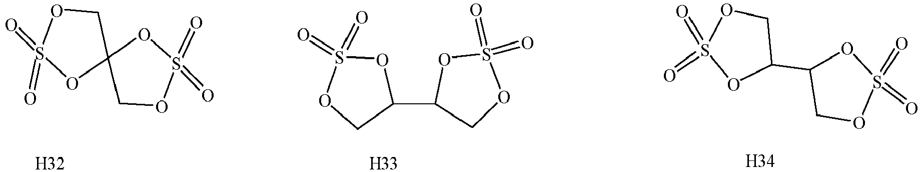

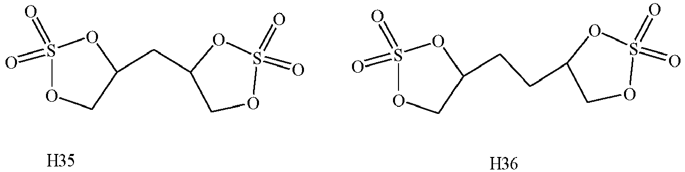

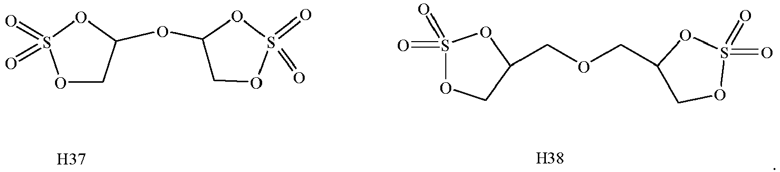

With at least one of the above compounds as the first additive, a more dense and stable interfacial film with stronger lithium ion conductivity can be formed on the surface of the positive electrode active material, and also a more dense and stable interfacial film can be formed on the surface of the negative electrode active material, so that even after a long period of charge and discharge, said positive and negative electrode interfacial films are still effective in preventing active materials from coming into contact with the non-aqueous electrolytic solution, thus effectively reducing leaching out of manganese ions and reducing gas production, further improving cycle performance and storage performance of the secondary battery.

In any embodiment of the present application, said first additive is present in an amount of W1% by weight, with W1 being 0.01 to 20, optionally 0.1 to 10, more optionally 0.5 to 5, based on the total weight of said non-aqueous electrolytic solution. As a result, lithium ion conductivity of the lithium manganese phosphate positive electrode active material after being encompassed by pyrophosphate can be improved without significantly increasing interfacial impedance of the positive and negative electrode, and thus the secondary battery can have a high capacity exertion and good rate performance, cycle performance and storage performance.

In any embodiment of the present application, said first cladding layer has a cladding amount of C1% by weigh, with C being greater than 0 wt% and less than or equal to 7 wt%, optionally of from 4 wt% to 5.6 wt%, based on the weight of said core. As result, it is allowed to effectively utilize the first cladding layer without affecting kinetic performance of secondary batteries due to an excessively thick cladding layer.

In any embodiment of the present application, said second cladding layer has a cladding amount of C2% by weight, with C2 being greater than 0 wt% and less than or equal to 6 wt%, optionally of from 3 wt% to 5 wt%, based on the weight of said core. As a result, the presence of the second cladding layer can avoid direct contact between the positive electrode active material and the electrolytic solution, reduce erosion of the positive electrode active material by the electrolytic solution, and improve conductivity of the positive electrode active material. When the amount of the second cladding layer is within the above range, specific capacity of the positive electrode active material can be effectively improved.

In any embodiment of the present application, W1/(C1+C2) is 0.001 to 2, optionally 0.01 to 1, and more optionally 0.05 to 1. As a result, the secondary battery is able to have a high capacity exertion and a good rate performance, cycle performance, and storage performance.

In any embodiment of the present application, the non-aqueous electrolytic solution further includes a second additive, and the second additive comprises one or more of a cyclic carbonate compound containing unsaturated bonds, a halogenated cyclic carbonate compound, a nitrile compound, a phosphonitrile compound, an aromatic hydrocarbon and halogenated aromatic hydrocarbon compound, an anhydride compound, a phosphite ester compound, a phosphate ester compound, a borate ester compound, a sulfite ester compound, a methylene disulfonate compound, and an isocyanate compound. When the non-aqueous electrolytic solution comprises both the first additive and the second additive, the second additive helps to form a more dense and stable interfacial film on the surface of the positive electrode and/or the negative electrode active material, so as to further improve at least one of cycle performance, storage performance, rate performance, and safety performance of the secondary battery.

In any embodiment of the present application, in said core, a ratio of y to 1-y is from 1:10 to 10:1, optionally from 1:4 to 1:1. As a result, it is allowed to further improve energy density and cycle performance of the secondary battery.

In any embodiment of the present application, in said core, a ratio of z to 1-z is from 1:9 to 1:999, optionally from 1:499 to 1:249. As a result, it is allowed to further improve energy density and cycle performance of the secondary battery.

In any embodiment of the present application, said A is at least two elements selected from Fe, Ti, V, Ni, Co, and Mg. As a result, said A being selected from two or more metals in the above range facilitates enhancement of doping effect at the manganese site, further reducing activity of surface oxygen and inhibiting leaching out of manganese ions.

In any embodiment of the present application, said first cladding layer contains phosphate salts having a crystal plane spacing of 0.345 nm to 0.358 nm, and a crystal orientation (111) angle of 24.25° to 26.45°. As a result, it is allowed to further improve cycle performance and rate performance of the secondary battery.

In any embodiment of the present application, said first cladding layer contains pyrophosphate salts having a crystal plane spacing of 0.293 nm to 0.326 nm, and a crystal orientation (111) angle of from 26.41° to 32.57°. As a result, it is allowed to further improve cycle performance and rate performance of the secondary battery.

In any embodiment of the present application, a weight ratio of pyrophosphate salts and phosphate salts in said first cladding layer is from 1:3 to 3:1, optionally from 1:3 to 1:1. As a result, by means of pyrophosphate and phosphate in a suitable weight ratio range, both manganese ions can be effectively hindered from leaching out, and surface hetero-lithium content can be effectively reduced to reduce interfacial side reactions, thus improving rate performance, cycle performance, storage performance and safety performance of the secondary battery.

In any embodiment of the present application, the pyrophosphate salts and the phosphate salts each independently has a crystallinity of from 10% to 100%, optionally from 50% to 100%. As a result, the pyrophosphate salts and the phosphate salts having the above crystallinity facilitate to fully exert the function of the pyrophosphate salts in hindering leaching out of manganese ions and of the phosphate salts in reducing content of lithium impurity on the surface and reducing interfacial side reactions.

In any embodiment of the present application, said positive electrode active material has a Li/Mn anti-site defect concentration of 4% or less, optionally of 2% or less. As a result, it is allowed to further improve specific capacity and rate performance of the positive electrode active material.

In any embodiment of the present application, said positive electrode active material has a lattice change rate of 6% or less, optionally of 4% or less. As a result, the rate performance of secondary batteries can be improved.

In any embodiment of the present application, said positive electrode active material has a surface oxygen valence of -1.88 or less, optionally -1.89 to -1.98. As a result, the cycle performance and storage performance of secondary batteries can be improved.

In any embodiment of the present application, said positive electrode active material has a compaction density of 2.0 g/cm³ or more, optionally 2.2 g/cm³ or more, at 3 tonnes. As a result, the bulk energy density of secondary batteries can be increased.

In any embodiment of the present application, the positive electrode active material has a specific surface area of B in m²/g, with B being in the range of 7 to 18, optionally 10 to 15. As a result, it is allowed to ensure that the positive electrode plate has a high lithium ion conductivity, while the secondary battery has good rate performance, cycle performance and storage performance.

A second aspect of the present application provides a battery module, comprising the secondary battery according to the first aspect of the present application.

A third aspect of the present application provides a battery pack, comprising the battery module according to the second aspect of the present application.

A fourth aspect of the present application provides an electrical device comprising at least one of the secondary battery of the first aspect of the present application, the battery module of the second aspect of the present application or the battery pack of the third aspect of the present application.

The battery module, battery pack and electrical device include the secondary battery of the present application, and thus have at least the same advantages as said secondary battery.

### DESCRIPTION OF THE DRAWINGS

In order to explain the technical solutions of the embodiments of the present application more clearly, the following will briefly introduce the drawings that need to be used in the embodiments of the present application. Apparently, the drawings described below are only some embodiments of the present application. A person skilled in the art can obtain other drawings based on the accompanying drawings without creative work.
FIG. 1 is a schematic diagram of a secondary battery according to an embodiment of the present application.
FIG. 2 is an exploded view of a secondary battery according to the embodiment of the present application as shown in FIG. 1.
FIG. 3 is a schematic diagram of a battery module according to an embodiment of the present application.
FIG. 4 is a schematic diagram of a battery pack according to an embodiment of the present application.
FIG. 5 is an exploded view of the battery pack according to the embodiment of the present application as shown in FIG. 4.
FIG. 6 is a schematic diagram of an electrical device according to an embodiment of the present application using the secondary battery of the present application as power.
FIG. 7 illustrates a comparison of an XRD spectrum of the core of the positive active materials prepared in Example 1-1 with the XRD standard spectrum (00-033-0804) of lithium manganese phosphate.

In the drawings, the accompanying drawings are not necessarily drawn to an actual scale. Among them, the reference sings in the accompanying drawings are illustrated as follows: 1 - battery pack, 2 - upper case, 3 - lower case, 4 - battery module, 5 - secondary battery, 51 - housing, 52 - electrode assembly, and 53- cover plate.

### DETAILED DESCRIPTION

Hereinafter, embodiments of the secondary battery and the battery module, the battery pack and the electrical device containing the same will be described in detail with reference to the accompanying drawings as appropriate. However, unnecessary detailed descriptions may be omitted in some cases, for example the detailed description of a well-known item or the repetitive description of an actually identical structure, so as to prevent the following description from becoming unnecessarily redundant and to facilitate understanding by those skilled in the art. In addition, the drawings and the following description are provided for those skilled in the art to fully understand the present application, and are not intended to limit the subject matter described in the claims.

The "range(s)" disclosed in this application is/are defined in the form of lower and upper limits, and a given range is defined by selection of a lower limit and an upper limit that define boundary of the particular range. Ranges defined in this manner may or may not be inclusive of the endpoints, and may be arbitrarily combined. That is, any lower limit may be combined with any upper limit to form a range. For example, if the ranges of 60-120 and 80-110 are listed for a particular parameter, it is to be understood that the ranges of 60-110 and 80-120 are also contemplated. Additionally, if the minimum range values 1 and 2 are listed, and the maximum range values 3, 4, and 5 are listed, the following ranges are all expected: 1-3, 1-4, 1-5, 2- 3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and the range "0-5" is just an abbreviated representation of the combination of these numerical values. In addition, when a parameter is expressed as an integer greater than or equal to 2, it is equivalent to disclose that the parameter is, for example, an integer of 2, 3, 4, 5, 6, 7, 8, 9, 10, 11, 12, and the like.

Unless stated otherwise, all the embodiments and the optional embodiments of the present application can be combined with each other to form a new technical solution, and such technical solution should be considered to be included in the disclosure of the present application.

Unless stated otherwise, all technical features and optional technical features of the present application can be combined with each other to form a new technical solution, and such technical solution should be considered to be included in the disclosure of the present application.

Unless stated otherwise, all steps of the present application can be carried out sequentially, and also can be carried out randomly, preferably they are carried out sequentially. For example, the method includes steps (a) and (b), indicating that the method may include steps (a) and (b) performed in sequence, or that the method may include steps (b) and (a) performed in sequence. For example, reference to the method further comprising step (c) indicates that step (c) may be added to the method in any order. As an example, the method may comprises steps (a), (b) and (c), steps (a), (c) and (b), or steps (c), (a) and (b), and the like.

Unless stated otherwise, the transition phases "comprise", "comprising", "contain" and "containing" mentioned in the present application mean that it is drafted in an open mode, or it may also mean a close mode. For example, the transition phases "comprise", "comprising", "contain" and "containing" may mean that other components not listed may also be included or contained, or only the listed components may be included or contained.

In the present application herein, unless otherwise stated, the term "or" is inclusive. For example, the phrase "A or B" means "A, B, or both A and B". More specifically, any of the following conditions meets "A or B": A is true (or present) and B is false (or absent); A is false (or absent) and B is true (or present); or both A and B are true (or present).

It shall note that as used herein, the term "median particle size Dv50" is a particle size at which a cumulative volume distribution percentage of a material reaches to 50%. In the present application, the median particle size Dv50 of a material may be determined using a laser diffraction particle size analysis. For example, with reference to standard GB/T 19077-2016, it is determined using a laser particle size analyzer (e.g., Malvern Master Size 3000).

As used herein, the term "cladding layer" refers to a layer of material covering a core, and said layer of material may completely or partially cover the core. Use of the term "cladding layer" is used only for convenience of description and is not intended to limit the present invention. Additionally, each cladding layer may be fully or partially cover the core.

As used herein, the term "source" refers to a compound that is a source of an element. As examples, the types of said "source" include, without being limited to, carbonate salts, sulfate salts, nitrate salts, elemental substances, halides, oxides, hydroxides, and the like.

As used herein, the terms "a plurality of ", and "more" mean two or more.

As used herein, the term "alkyl" refers to a saturated hydrocarbon group, including both straight chain and branched chain structures. Examples of alkyl include, without being limited to, methyl, ethyl, propyl (e.g., n-propyl, isopropyl), butyl (e.g., n-butyl, iso-butyl, sec-butyl, tert-butyl), and pentyl (e.g., n-pentyl, iso-pentyl, neopentyl). In various embodiments, C1-C6 alkyl group is an alkyl group containing from 1 to 6 carbon atoms.

As used herein, the term "haloalkyl" refers to a group obtained by substituting at least one hydrogen atom in an alkyl group with a halogen atom. The number of halogen atoms in the haloalkyl may be one or more. When more than one halogen atoms are present in the haloalkyl, the halogen atoms may be the same or different.

As used herein, the term "alkoxy" refers to an alkyl group containing an oxygen atom (-O-). Examples of alkoxy include, without being limited to, methoxy, ethoxy, or propoxy. In various embodiments, C1-C6 alkoxy is an alkoxy containing 1 to 6 carbon atoms.

As used herein, the term "haloalkoxy" refers to a group obtained by substituting at least one hydrogen atom in an alkoxy group with a halogen atom. The number of halogen atoms in the haloalkoxy may be one or more. When more than one halogen atoms are present in the haloalkoxy, the halogen atoms may be the same or different.

As used herein, a group with the suffix "ene" indicates that the group is an organic divalent functional group. That is, it indicates the group remaining after an organic compound corresponding to the group lose two hydrogen atoms.

As used herein, the term "oxa-alkylene" represents a group obtained by replacement of at least one carbon atom in an alkylene group by an oxygen atom. The number of oxygen atoms in an oxa-alkylene group may be one or more. Examples of oxa-alkylene include, without being limited to, 2-oxa-1,3-propylene (-CH₂-O-CH₂-), 2-oxa-1,4-butylene (-CH₂-O-CH₂CH₂-), and 3-oxa-1,5-pentylene (-CH₂CH₂-O-CH₂CH₂-). In various embodiments, C1-C6 oxa-alkylene is an oxa-alkylene containing from 1 to 6 carbon atoms.

For purposes herein, a halogen atom are a fluorine atom, a chlorine atom, a bromine atom, and an iodine atom. Optionally, the halogen atom is a fluorine atom.

As used herein, substituents of compounds are disclosed as groups or ranges. It is explicitly expected that such a description includes each individual subcombination of members of these groups and ranges. For example, the term "C1-C6 alkyl group" is explicitly expected to disclose C1, C2, C3, C4, C5, C6, C1-C6, C1-C5, C1-C4, C1-C3, C1-C2, C2-C6, C2-C5, C2-C4, C1-C3, C1-C2, C3-C6, C3-C5, C3-C4, C4-C6, C4-C5, C5-C6, alkyl groups.

The inventors of the present application found in an actual operation that leaching out of manganese ions is serious during deep charging and discharging of a lithium manganese phosphate positive electrode active material. Although the prior art have attempted to coat the lithium manganese phosphate with lithium iron phosphate to reduce interfacial side reactions, such a cladding cannot prevent the leached-out manganese ions from migrating into a non-aqueous electrolytic solution. The leached-out manganese ions are reduced to metal manganese after migration to a negative electrode. The produced metal manganese is equivalent to a "catalyst", which can catalyze decomposition of SEI (solid electrolyte interphase) film on the surface of the negative electrode to produce a by-product. One part of the by-product is gas, which is prone to cause the secondary battery to expand and affect safety performance of the secondary battery, and the other part is deposited on the surface of the negative electrode, and blocks channel of lithium ions in and out of the negative electrode, resulting in an increased impedance of the battery and negatively affecting kinetic performance of the battery. In addition, in order to supplement the decomposed SEI film, the non-aqueous electrolytic solution and active lithium ions in the battery are continuously consumed, which has an irreversible impact on capacity retention rate of the battery.

The inventor, after thorough consideration on a positive electrode and a non-aqueous electrolytic solution, has designed a secondary battery capable of simultaneously combining a high energy density with good rate performance, cycle performance, storage performance and safety performance.

Specifically, a first aspect of the present application provides a secondary battery.

### SECONDARY BATTERY

A secondary battery, also known as a rechargeable battery or accumulator, is a battery that can continue to be used by activating its active material by means of charging after the battery has been discharged. Typically, a secondary battery includes an electrode assembly and a non-aqueous electrolytic solution, and the electrode assembly includes a positive electrode plate, a negative electrode plate, and a separator. The separator is disposed between the positive electrode plate and the negative electrode plate, which mainly functions to prevent short circuit of the positive and negative electrodes and at the same time allow lithium ions to pass through. The non-aqueous electrolytic solution functions to conduct lithium ions between the positive electrode plate and the negative electrode plate.

### [Positive electrode plate]

The secondary battery of the present application adopts a positive electrode plate comprising a positive electrode active material with a core-shell structure wherein said positive electrode active material comprises an core and a shell covering said core, said core comprises Li₁₊ₓMn_{1-y}A_{y}P_{1-z}R_{z}O₄, x is in the range of -0.100 to 0.100, y is in the range of 0.001 to 0.500, z is in the range of 0.001 to 0.100, said A comprises one or more elements selected from Zn, Al, Na, K, Mg, Mo, W, Ti, V, Zr, Fe, Ni, Co, Ga, Sn, Sb, Nb, and Ge, optionally one or more elements selected from Fe, Ti, V, Ni, Co and Mg, said R comprises one or more elements selected from B, Si, N and S; said shell comprises a first cladding layer covering said core and a second cladding layer covering said first cladding layer, said first cladding layer comprises pyrophosphate MP₂O₇ and phosphate XPO₄, said M and X each independently comprises one or more elements selected from Li, Fe, Ni, Mg, Co, Cu, Zn, Ti, Ag, Zr, Nb, and Al, and said second cladding layer comprises carbon.

Unless otherwise stated, in the above chemical formula, when A represents more than two elements, the above range for the y value is not only for the stoichiometric number of each element as A, but also for the sum of the stoichiometric numbers of each element as A. For example, when A represents more than two elements A1, A2 ...... and An, each of the respective stoichiometric numbers y1, y2 ......and yn of respective A1, A2 ......and An must fall within the numerical range defined by the present application for y, and the sum of y1, y2...... and yn must also fall within such numerical range of the present application. Similarly, in the case where R is more than two elements, the limitations on numerical ranges for the stoichiometric numbers of R in the present application also have the above meaning.

The inventors have found, after extensive research, that for a lithium manganese phosphate positive electrode active material, the problems such as serious leaching out of manganese ions and high surface reactivity may be caused by the ginger-Taylor effect of Mn³⁺ and a change of Li⁺ channel size after deintercalation of lithium. For this reason, by doping modification of lithium manganese phosphate and multilayer clapping of lithium manganese phosphate, the inventors have obtained positive electrode active materials capable of significantly reducing leaching out of manganese ions and lowering the rate of lattice change.

The positive electrode active material of lithium manganese phosphate of the present application has a core-shell structure with a bilayer cladding layer, in which the core comprises Li₁₊ₓMn_{1-y}A_{y}P_{1-z}R_{z}O₄. Said core is doped with element A at the manganese site of lithium manganese phosphate to help reduce the rate of change of crystal lattice of lithium manganese phosphate in the process of intercalcating-deintercalcating of lithium, improve structural stability of the positive electrode active material of lithium manganese phosphate, greatly reduce leaching out of manganese ions and reduce oxygen activity on the surface of particles. The element R doped at the phosphorus site helps to change the difficulty of the Mn-O bond length change, thereby reducing migration barrier of lithium ions, promoting migration of lithium ions, and improving rate performance of secondary batteries.

The first cladding layer of the positive electrode active material of the present application includes pyrophosphate salts and phosphate salts. Due to the high migration barrier of transition metal in the pyrophosphate salts (>1 eV), the leaching out of transition metal ions can be effectively reduced. And the phosphate salts have excellent ability to conduct lithium ions and can reduce the content of lithium impurities on the surface.

The second cladding layer of the positive electrode active material of the present application is a carbon-containing layer, which can effectively improve conductivity and desolvation ability of LiMnPO₄. In addition, the "barrier" effect of the second cladding layer can further hinder migration of manganese ions into a non-aqueous electrolytic solution and reduce erosion of the electrolytic solution on the positive electrode active material.

Therefore, by doping with specific elements and surface cladding of lithium manganese phosphate in the present application can effectively reduce the leaching out of manganese ions in the process of intercalation and deintercalation of lithium and promote migration of lithium ions, thereby improving rate performance, cycle performance, storage performance and safety performance of secondary batteries.

It should be noted that the core of the positive electrode active material of the present application has basically same primary characteristic peaks at position to undoped LiMnPO₄, indicating that the core of the doped lithium manganese phosphate positive electrode active material has no impurity phase and the improvement of battery performances is mainly caused by doping of elements rather than by an impurity phase.

In said core, x is from -0.100 to 0.100, for example, x may be 0.006, 0.004, 0.003, 0.002, 0.001, 0, -0.001, -0.003, -0.004, -0.005, -0.006, -0.007, -0.008, -0.009, or -0.100.

In said core, y is from 0.001 to 0.500. For example, y may be 0.1, 0.2, 0.25, 0.3, 0.35, 0.4, or 0.45.

In said core, z is from 0.001 to 0.100. For example, z may be 0.001, 0.002, 0.003, 0.004, 0.005, 0.006, 0.007, 0.008, 0.009, or 0.100.

Optionally, in some embodiments, a ratio of y to 1-y in said core is from 1:10 to 10:1, optionally from 1:4 to 1:1. Herein y represents the sum of stoichiometric numbers of doping elements at the site of Mn. The energy density and cycle performance of secondary batteries may be further improved in the event that the above conditions are satisfied.

Optionally, in some embodiments, in said core, a ratio of z to 1-z is from 1:9 to 1:999, optionally from 1:499 to 1:249. Herein y represents the sum of stoichiometric numbers of doping elements at the site of P. The energy density and cycle performance of secondary batteries may be further improved in the event that the above conditions are satisfied.

In some embodiments, optionally, said A is at least two elements selected from Fe, Ti, V, Ni, Co, and Mg.

Simultaneous doping of more than two of the above elements at the site of manganese in a positive electrode active material of lithium manganese phosphate is conducive to enhancing doping effect, which on the one hand further reduces the rate of change of crystal lattice so as to reduce leaching out of manganese ions and reduce consumption of a non-aqueous electrolytic solution and active lithium ions, and on the other hand, is also conducive to further reducing the surface oxygen activity and reducing interfacial side reactions between the positive electrode active material and a non-aqueous electrolytic solution, so as to improve cycle performance and high temperature storage performance of secondary batteries.

In some embodiments, optionally, said first cladding layer contains phosphate salts having a crystal plane spacing of 0.345 nm to 0.358 nm, and a crystal orientation (111) angle of 24.25° to 26.45°.

Optionally, in some embodiments, said first cladding layer contains pyrophosphate salts having a crystal plane spacing of 0.293 nm to 0.326 nm, and a crystal orientation (111) angle of from 26.41° to 32.57°.

When the crystal plane spacing and the crystal orientation (111) angle of phosphate salts and pyrophosphate salts in the first cladding layer are in the above ranges, impurity phase(s) in the cladding layer can be effectively reduced, so as to enhance specific capacity, cycle performance, and rate performance of the positive electrode active material.

In some embodiments, optionally, a weight ratio of the pyrophosphate salts and the phosphate salts in said first cladding layer is from 1:3 to 3:1, optionally 1:3 to 1:1.

A suitable ratio of the pyrophosphate salts and the phosphate salts is conducive to exerting their synergistic effect, which can effectively impede leaching out of manganese ions, and also effectively reduce content of impurity lithium on the surface and reduce interfacial side reactions, thereby increasing rate performance, cycle performance, storage performance and safety performance of secondary batteries. And the following situations can be effectively avoided: if the amount of pyrophosphate salts is too high and of phosphate salts is too low, it may lead to an increase in battery impedance; if the amount of phosphate salts is too high and of pyrophosphate salts is too low, the effect of reducing manganese ion leaching out is not significant.

In some embodiments, optionally, the pyrophosphate salts and the phosphate salts each independently has a crystallinity of from 10% to 100%, optionally from 50% to 100%.

In the first cladding layer of the positive electrode active material of lithium manganese phosphate of the present application, the pyrophosphate salts and phosphate salts having a certain degree of crystallinity are conducive to maintaining structural stability of the first cladding layer and reducing lattice defects. It is conducive to exert well the role of the pyrophosphate salts in hindering leaching out of manganese ions on the one hand, and on the other hand, it is also conducive to exert the role of the phosphate salts in reducing the amount of impurity lithium on the surface and lowering oxygen valence on the surface, so as to reduce interfacial side reactions between the positive electrode active material and a non-aqueous electrolytic solution, reduce consumption of a non-aqueous electrolytic solution, and improve cycle performance, storage performance and safety performance of secondary batteries.

It is to be noted that in the present application, the crystallinity of the pyrophosphate salts and the phosphate salts can be altered, for example, by adjusting process conditions of a sintering process such as a sintering temperature, a sintering period, and the like. The crystallinity of the pyrophosphate salts and phosphate salts may be measured by methods known in the art, for example by methods such as X-ray diffraction, density methods, infrared spectroscopy, differential scanning calorimetry and nuclear magnetic resonance absorption.

In some embodiments, optionally, said first cladding layer has a cladding amount of C1% by weight, with C1 being greater than 0 wt% and less than or equal to 7 wt%, optionally from 4 wt% to 5.6 wt%, based on the weight of said core.

When the cladding amount of said first cladding layer is within the above range, it is allowed to further reduce leaching out of manganese ions while further promoting transmission of lithium ions. And the following situations can be effectively avoided: if the cladding amount of the first cladding layer is too low, the leaching out of manganese ions cannot be inhibited sufficiently by pyrophosphate, and at the same time, the transmission performance of lithium ions cannot be improved significantly; if the cladding amount of the first cladding layer is too high, it may lead to an excessively thick cladding layer, which will increase impedance of batteries, and affect kinetic performance of secondary batteries.

In some embodiments, optionally, said second cladding layer has a cladding amount of C2% by weight, with C2 being greater than 0 wt% and less than or equal to 6 wt%, optionally from 3 wt% to 5 wt%, based on the weight of said core.

A carbon-containing layer as the second cladding layer can, on the one hand, exert its function of a "barrier" to avoid direct contact between the positive electrode active material and a non-aqueous electrolytic solution, thereby reducing erosion of the non-aqueous electrolytic solution on the positive electrode active material, and improving safety performance of secondary batteries at high temperatures. On the other hand, it has a strong conductive ability and can reduce internal resistance of batteries, thus improving kinetic performance of secondary batteries. However, since carbon materials have a low specific capacity, when the second cladding layer containing the same is used in an excessive amount, the overall specific capacity of the positive electrode active material may be reduced. Therefore, when the cladding amount of the second cladding layer is within the above range, it is possible to further improve kinetic performance and safety performance of the secondary battery without sacrificing specific capacity of the positive electrode active material.

In some embodiments, optionally, said positive electrode active material has a Li/Mn anti-site defect concentration of 4% or less, optionally of 2% or less.

The Li/Mn anti-site defect refer to swapping of the Li⁺ and Mn²⁺ sites in a LiMnPO₄ lattice. The Li/Mn anti-site defect concentration refers to a percentage of Li⁺ is swapped with Mn²⁺ relative to the total amount of Li⁺ in the positive electrode active material. Since a transport channel for Li⁺ is a one-dimensional channel and Mn²⁺ is difficult to migrate in the Li⁺ transport channel, the Mn²⁺ having the anti-site defect will hinder Li⁺ transport. In the positive electrode active material of the present application, the specific capacity and rate performance of the positive electrode active material can be improved by controlling the Li/Mn anti-site defect concentration at a low level. In the present application, the anti-site defect concentration can be determined, for example, according to JIS K 0131-1996.

In some embodiments, optionally, said positive electrode active material has a lattice variability of 6% or less, optionally of 4% or less.

A lithium intercalation-deintercalation process of LiMnPO₄ is a two-phase reaction. The interfacial stress between the two phases is determined by the lattice variability, and the smaller the lattice variability is, the smaller the interfacial stress is, and the easier the Li⁺ transport is. Thus, reducing lattice variability of the core will facilitate to enhance Li⁺ transport, thereby improving rate performance of secondary batteries.

In some embodiments, optionally, said positive electrode active material has an average discharge voltage of 3.5 V or more and a discharge specific capacity of 140 mAh/g or more when used as a button cell; optionally, has an average discharge voltage of 3.6 V or more and a discharge specific capacity of 145 mAh/g or more.

Although the undoped LiMnPO₄ has an average discharge voltage of above 4.0 V, it has a lower discharge specific capacity, usually less than 120 mAh/g, and thus the secondary battery adopting the same has a lower energy density. By adjusting the lattice variability by doping can result in a substantial increase in terms of discharge specific capacity, and a significant increase in an overall energy density of secondary batteries in the presence of a slight decrease in terms of an average discharge voltage.

In some embodiments, optionally, said positive electrode active material has a surface oxygen valence of is -1.88 or less, optionally -1.98 to -1.88.

This is due to the fact that the higher the valence state of oxygen in a compound, the stronger its ability to gain electrons is, i.e., the stronger its oxidizability is. In the lithium manganese phosphate positive electrode active material of the present application, by controlling the surface oxygen valence at a lower level, it is possible to reduce reaction activity on the surface of the positive electrode active material, and to reduce interfacial side reactions between the positive electrode active material and a non-aqueous electrolytic solution, thereby improving cycle performance and high temperature storage performance of secondary batteries.

In some embodiments, optionally, said positive electrode active material has a compaction density of 2.0 g/cm³ or more, optionally from 2.2 g/cm³ or more, at 3 tonnes (T).

A higher compaction density of the positive electrode active material, i.e., a higher weight per unit volume of the positive electrode active material, will be more conducive to improving volumetric energy density of secondary batteries. In the present application, the compaction density may, for example, be determined according to GB/T 24533-2009.

In some embodiments, optionally, the positive electrode active material has a specific surface area of B in m²/g, with B being from 7 to 18, optionally from 10 to 15.

If the specific surface area of the positive active material is high, lithium ion conductivity of the positive electrode plate will be increased, which in turn can improve capacity exertion and rate performance of secondary batteries. However, the specific surface area of the positive electrode active material should not be too high, which may increase contact area between the positive electrode active material and a non-aqueous electrolytic solution, thereby increasing their interfacial side reactions and affecting cycle performance and storage performance of secondary batteries. By controlling the specific surface area of the positive electrode active material in a suitable range, it can ensure that the positive electrode plate has a high lithium ions conductivity, and at the same time, the secondary battery has good rate performance, cycle performance and storage performance. The specific surface area of the positive electrode active material has the common meaning in the art and may be determined by equipment and method known in the art. For example, with reference to GB/T 19587-2017, the nitrogen adsorption specific surface area analysis method can be used for testing, and the BET (BrunauerEmmett Teller) method can be used for calculating. The test can be carried out by Micromeritics Tri-Star 3020 specific surface area aperture analysis tester.

The present application further provides a method for the preparation of a positive electrode active material, comprising the steps of providing a core material and cladding the core material.

In the step of providing an core material, said core comprises Li₁₊ₓMn_{1-y}A_{y}P_{1-z}R_{z}O₄, wherein x is in the range of -0.100 to 0.100, y is in the range of 0.001 to 0.500, z is in the range of 0.001 to 0.100, said A comprises one or more elements selected from Zn, Al, Na, K, Mg, Mo, W, Ti, V, Zr, Fe, Ni, Co, Ga, Sn, Sb, Nb, and Ge, optionally one or more elements selected from Fe, Ti, V, Ni, Co and Mg, and said R comprises one or more elements selected from B, Si, N and S.

The step of cladding the core material comprises providing an MP₂O₇ powder and an XPO₄ suspension comprising a carbon source, adding said core material, and MP₂O₇ powder to the XPO₄ suspension comprising a carbon source and mixing them followed by sintering, thereby obtaining a positive electrode active material, wherein said M and X each are independently one or more elements selected from Li, Fe, Ni, Mg, Co, Cu, Zn, Ti, Ag, Zr, Nb and Al, and the positive electrode active material has a core-shell structure comprising said core and a shell covering said core, said shell comprises a first cladding layer covering said core and a second cladding layer covering said first cladding layer, said first cladding layer comprising pyrophosphate salts MP₂O₇ and phosphate salts XPO₄, and said second cladding layer comprising carbon.

There is no particular limitation to the source of materials in the method of preparation of the present application. Optionally, materials for the inner core in the preparation method of the present application may be commercially obtained or may be prepared by the method of the present application. Optionally, said materials for the core are prepared by the methods described below.

In some embodiments of the present application, optionally the step for providing an core material comprises the following step (1) and step (2):
Step (1), dissolving a manganese source, a source of element A and an acid in a solvent with stirring to obtain particles of a manganese salt doped with element A;
Step (2), mixing the resulting particles of a manganese salt doped with element A with a lithium source, a phosphorus source, and a source of element R in a solvent with stirring to obtain a slurry and then sintering it under a protection of inert gas atmosphere, thereby obtaining lithium manganese phosphate doped with element A and element R wherein the lithium manganese phosphate doped with element A and element R is Li₁₊ₓMn_{1-y}A_{y}P_{1-z}R_{z}O₄, in which x is in the range of -0.100 to 0.100, y is in the range of 0.001 to 0.500, z is in the range of 0.001 to 0.100, said A comprises one or more elements selected from Zn, Al, Na, K, Mg, Mo, W, Ti, V, Zr, Fe, Ni, Co, Ga, Sn, Sb, Nb, and Ge, optionally one or more elements selected from Fe, Ti, V, Ni, Co and Mg, and said R comprises one or more elements selected from B, Si, N and S.

Optionally, said step (1) is carried out at a temperature in the range of 20-120°C, optionally in the range of 25-80°C. Stirring in said step (1) is carried out at a stirring rate of 500-700 rpm for 60-420 minutes, optionally for 120-360 minutes.

By controlling the reaction temperature, stirring rate and mixing time during doping, it is possible to enable doping elements to distribute uniformly, to reduce lattice defects, to reduce leaching out of manganese ions and to reduce interfacial side reactions between the positive electrode active material and a non-aqueous electrolytic solution, thereby improving specific capacity and rate performance of the positive electrode active material.

It is to be noted that in the present application, a source of an element may comprise one or more of an elemental substance, a sulfate, a halide, a nitrate, an organic acid salt, an oxide, or a hydroxide of the element, with the proviso that such a source may fulfill the purpose of the method of preparation of the present application. By way of example, said source of element A is one or more selected from an elemental substance, a sulfate, a halide, a nitrate, an organic acid salt, an oxide, or a hydroxide of element A. By way of example, said source of element R is one or more selected from an elemental substance, a sulfate, a halide, a nitrate, an organic acid salt, an oxide, or a hydroxide of element R, as well as an inorganic acid of element R. Optionally, the inorganic acid of element R is one or more selected from phosphoric acid, nitric acid, boric acid, siliceous acid, and orthosilicic acid.

Optionally, in step (1), the source of manganese in the present application is one or more selected from elemental manganese, manganese dioxide, manganese phosphate, manganese oxalate, and manganese carbonate.

Optionally, the element A is iron, and optionally, in step (1), the source of iron is one or more selected from ferrous carbonate, ferric hydroxide, and ferrous sulfate.

Optionally, in step (1), said acid is one or more selected from hydrochloric acid, sulfuric acid, nitric acid, phosphoric acid, organic acids such as oxalic acid, and optionally oxalic acid. In some embodiments, said acid is a dilute acid with a concentration of 60 wt% or less.

Optionally, in step (2), the source of lithium in the present application is one or more selected from lithium carbonate, lithium hydroxide, lithium phosphate, and lithium dihydrogen phosphate.

Optionally, in step (2), the source of phosphorus in the present application is one or more selected from diammonium hydrogen phosphate, ammonium dihydrogen phosphate, ammonium phosphate and phosphoric acid.

In some embodiments, optionally, the solvent used in the preparation method described in the present application is a solvent commonly used in the art. For example, the solvents in the preparation methods of the present application may each be independently at least one selected from ethanol, and water (e.g., deionized water).

In some embodiments, optionally, the pH of solution is controlled to be from 4 to 6 in the preparation of the elemental A-doped manganese salt particles. It is noted that the pH of the resulting mixture may be adjusted in the present application by methods commonly used in the art, for example, by the addition of an acid or a base.

In some embodiments, optionally, in step (2), a molar ratio of said manganese salt particles doped with element A to the source of lithium, and to the source of phosphorus is 1 :(0.5-2.1):(0.5-2.1).

In some embodiments, optionally, in step (2), the sintering is carried out at 600°C to 800°C for 4 hours to 10 hours under the protection of an inert gas or a mixed atmosphere of inert gas and hydrogen. As a result, the resulting sintered material has a higher crystallinity, so that specific capacity and rate performance of the positive electrode active material can be improved.

Optionally, a mixture of inert gas and hydrogen is a mixture of nitrogen (70 vol% to 90 vol%) + hydrogen (10 vol% to 30 vol%).

In some embodiments, optionally, said MP₂O₇ powder is a commercially available product, alternatively, optionally, said MP₂O₇ powder is prepared by: adding a source of element M and a source of phosphorus to a solvent, obtaining a mixture, adjusting pH of the mixture to be from 4 to 6, stirring it and reacting sufficiently, and then obtaining it by drying and sintering, wherein M is one or more selected from Li, Fe, Ni, Mg, Co, Cu , Zn, Ti, Ag, Zr, Nb, and Al.

Optionally, in the preparation of the MP₂O₇ powder, said drying step is carried out at 100°C to 300°C, optionally 150°C to 200°C for 4 hours to 8 hours.

Optionally, in the preparation of the MP₂O₇ powder, said sintering step is carried out under an inert gas atmosphere at 500°C to 800°C, optionally 650°C to 800°C for 4 hours to 10 hours.

In some embodiments, optionally, said XPO₄ suspension comprising a source of carbon is commercially available, alternatively, optionally, is prepared by mixing a source of lithium, a source of X, a source of phosphorus, and a source of carbon homogeneously in a solvent, and then warming up the reaction mixture to 60° C. to 120° C and keeping it at a temperature of from 2 hours to 8 hours, thereby obtaining the XPO₄ suspension comprising a source of carbon. Optionally, pH of said mixture is adjusted to be from 4 to 6 in the preparation of the XPO₄ suspension comprising a source of carbon.

Optionally, the carbon source is an organic carbon source and said organic carbon source is one or more selected from starch, sucrose, glucose, polyvinyl alcohol, polyethylene glycol, and citric acid.

In some embodiments, in the step of cladding the core material, a mass ratio of said A-element and R-element doped lithium manganese phosphate (core), MP₂O₇ powder, and XPO₄ suspension comprising a source of carbon is 1:(0.001-0.05):(0.001-0.05).

In some embodiments, optionally, said sintering temperature in the step of cladding the core material is from 500°C to 800°C, and said sintering time in the step of cladding the core material is from 4 hours to 10 hours.

In some embodiments, optionally, the lithium manganese phosphate positive electrode active material with a double-layer cladding layer of the present application has primary particles having a median particle size Dv50 of from 50 nm to 2000 nm.

The positive electrode plate of the present application comprises a positive electrode current collector and a positive electrode film layer provided on at least one surface of the positive electrode current collector. In particular, said positive electrode current collector has two surfaces opposite to each other in the direction of its own thickness, and said positive electrode film layer is provided on either or both of two opposite surfaces of said positive electrode current collector. The positive electrode film layer comprises the positive electrode active material of the present application described above.

In some embodiments, optionally, said positive electrode active material is present in said positive electrode film layer in a content of 10 wt% or more, based on the total weight of said positive electrode film layer. More optionally, said positive electrode active material is present in said positive electrode film layer in a content of from 90 wt% to 99.5wt%, based on the total weight of said positive electrode film layer.

When the content of said positive electrode active material is within the above range, it is conducive to fully utilizing advantages of the positive electrode active material of the present application.

The positive electrode film layer does not exclude other positive electrode active materials than the positive electrode material composition provided by the present application. For example, in some embodiments, the positive electrode film layer may further comprise at least one of a lithium transition metal oxide and a modified compound thereof. By way of example, said other positive electrode materials may include at least one of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and respective modified compounds thereof.

In some embodiments, said positive electrode film layer optionally further comprises a positive electrode conductive agent. The present application does not specifically limit the type of said positive electrode conductive agent, and as an example, said positive electrode conductive agent includes at least one of superconducting carbon, conductive graphite, acetylene black, carbon black, Ketjen black, carbon dots, carbon nanotubes, graphene, and carbon nanofibers.

In some embodiments, said positive electrode film layer optionally further comprises a binder. The present application does not specifically limit the type of said binder, and as an example, said binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate-based resin.

In some embodiments, said positive electrode current collector may be a metal foil or a composite current collector. As an example of a metal foil, an aluminum foil may be used. The composite current collector may include a polymeric material matrix and a metallic material layer formed on at least one surface of the polymeric material matrix. As an example, the metallic material may be at least one selected from aluminum, aluminum alloy, nickel, nickel alloy, titanium, titanium alloy, silver, and silver alloy. As an example, the polymeric material matrix may be selected from polypropylene (PP), polyethylene terephthalate (PET), polybutylene terephthalate (PBT), polystyrene (PS), polyethylene (PE), etc.

Said positive electrode film layer is usually made by applying a positive electrode slurry to the positive electrode current collector followed by drying and cold pressing. Said positive electrode slurry is usually formed by dispersing the positive electrode active material, an optional conductive agent, an optional binder, and any other components in a solvent and stirring uniformly. The solvent may be N-methylpyrrolidone (NMP), but is not limited thereto.

### [Negative electrode plate]

In some embodiments, said negative electrode plate comprises a negative electrode current collector and a negative electrode film layer provided on at least one surface of said negative electrode current collector and comprising a negative electrode active material. For example, said negative electrode current collector has two surfaces opposite to each other in the direction of its own thickness, and said negative electrode film layer is provided on either or both of two opposite surfaces of said negative electrode current collector.

Said negative electrode active material may be a negative electrode active material known in the art for use in secondary batteries. By way of example, said negative electrode active material includes, but is not limited to, at least one of natural graphite, artificial graphite, soft carbon, hard carbon, silicon-based material, tin-based material, and lithium titanate. Said silicon-based material may include at least one of elemental silicon, a silicon oxide, a silicon carbon composite, a silicon nitrogen composite, a silicon alloy material. Said tin-based materials may include at least one of elemental tin, a tin oxide, and a tin alloy material. The present application is not limited to these materials, and other conventionally known materials that can be used as negative electrode active materials for secondary batteries may also be used. These negative electrode active materials can be used alone, or in combination of two or more materials.

In some embodiments, said negative electrode film layer may also optionally comprise a negative electrode conductive agent. In the present application, the type of said negative conductive agent is not particularly limited and, as an example, said negative electrode conductive agent may include at least one of superconducting carbon, conductive graphite, acetylene black, carbon black, Ketjen black, carbon dots, carbon nanotubes, graphene, and carbon nanofibers.

In some embodiments, said negative electrode film layer may further optionally comprise a negative electrode binder. In the present application, the type of said negative binder is not particularly limited and, as an example, said negative electrode binder may include at least one of styrene-butadiene rubber (SBR), water-soluble unsaturated resin SR-1B, aqueous acrylic resins (e.g., polyacrylic acid PAA, polymethacrylic acid PMAA, polyacrylic acid sodium salt PAAS), polyacrylamide (PAM), polyvinyl alcohol (PVA), sodium alginate (SA), and carboxymethyl chitosan (CMCS).

In some embodiments, said negative electrode film layer may optionally also include other additives. As an example, the other additives may include thickeners, e.g., sodium carboxymethyl cellulose (CMC), and PTC thermistor material, etc.

In some embodiments, said negative electrode current collector may be a metal foil or a composite collector. As an example of a metal foil, a copper foil may be used. The composite collector may include a polymeric material matrix and a metallic material layer formed on at least one surface of the polymeric material matrix. As an example, the metallic material may be selected from at least one of copper, copper alloy, nickel, nickel alloy, titanium, titanium alloy, silver, and silver alloy. As an example, the polymer material matrix may be selected from polypropylene (PP), polyethylene terephthalate (PET), polybutylene terephthalate (PBT), polystyrene (PS), polyethylene (PE), etc.

Said negative electrode film layer is usually made by applying a negative electrode slurry to the negative electrode current collector followed by drying and cold pressing. Said negative electrode slurry is usually formed by dispersing the negative active material, an optional conductive agent, an optional binder, and any other optional additives in a solvent and stirring uniformly. The solvent may be N-methylpyrrolidone (NMP) and deionized water, but is not limited thereto.

Said negative electrode plate does not exclude other additional functional layers than said negative electrode film layer. For example, in some embodiments, the negative electrode plate described in the present application further comprises a conductive primer (e.g. being composed of a conductive agent and a binder) sandwiched between said negative electrode current collector and said negative electrode film layer and disposed on the surface of said negative electrode current collector. In some other embodiments, the negative electrode plate described in this application further comprises a protective layer covering the surface of said negative electrode film layer.

### [Separator]

There is no particular limitation on the type of separator in the present application, and any well-known porous-structure separator with good chemical stability and mechanical stability may be used.

In some embodiments, materials of the separator may be at least one of glass fibers, non-woven fabrics, polyethylene, polypropylene and polyvinylidene fluoride. The separator may be a single-layer film or a multi-layer composite film. When the separator is a multi-layer composite film, materials of each layer may be the same or different.

In some embodiments, said positive electrode plate, said separator, and said negative electrode plate may be made into an electrode assembly by a winding process or a stacking process.

### [Non-aqueous electrolytic solution]

The secondary battery comprises a non-aqueous electrolytic solution, which is a bridge for the passage of lithium ions in the secondary battery, takes the burden of transporting lithium ions between the positive and negative electrodes in the secondary battery, and plays a crucial role in capacity exertion, cycle performance, storage performance, and safety performance of the secondary battery.

The inventor, through research, found that specific elemental doping and surface cladding of lithium manganese phosphate can increase resistance to migration of manganese ions, effectively reduce leaching out of manganese ions, while reducing surface oxygen activity, reducing the content of lithium impurity, reducing interfacial side reactions between the positive electrode active material and the non-aqueous electrolytic solution, and reducing production of gas, so as to improve cycle performance and storage performance of the secondary battery, in particular high-temperature cycle performance and high-temperature storage performance. However, when the content of pyrophosphate in the first cladding layer is low, its effect of reducing leaching out of manganese ions is not significant. When the content of pyrophosphate is high, it will lead to an increase in impedance of the battery due to its poor ability of pyrophosphate itself to conduct lithium ions, resulting in a limited improvement in rate performance of the secondary battery. For example, the average discharge voltage of batteries adopting the materials decreases to different degrees compared to that of LiMnPO₄ before modification.

The inventor further conducted extensive research and skillfully added a first additive shown in Formula 1, 2, and 3 below to a non-aqueous electrolytic solution to break the above bottleneck. Specifically, the non-aqueous electrolytic solution of the present application comprises at least a first additive, and said first additive comprising one or more of the compounds shown in Formula 1, Formula 2, and Formula 3.

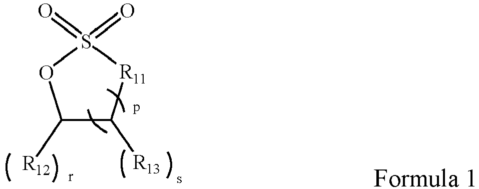

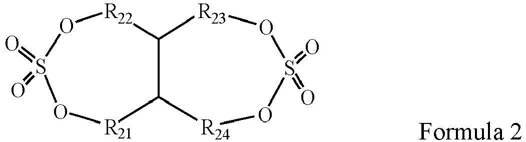

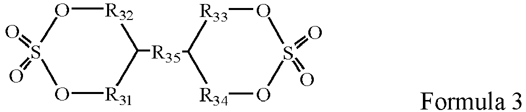

p represents 1, 2 or 3, optionally p represents 1 or 2.

r represents 1 or 2.

s represents 1 or 2.

R₁₁ represents an oxygen atom or C(Y¹)₂, Y¹ independently represents one of a hydrogen atom, a halogen atom, C1-C6 alkyl, C1-C6 haloalkyl, C1-C6 alkoxy, and C1-C6 haloalkoxy.

R₁₂ each independently represents one of a hydrogen atom, a halogen atom, C1-C6 alkyl, C1-C6 haloalkyl, C1-C6 alkoxy, and C1-C6 haloalkoxy.

R₁₃ each independently represents one of a hydrogen atom, a halogen atom, C1-C6 alkyl, C1-C6 haloalkyl, C1-C6 alkoxy, and C1-C6 haloalkoxy.

R₂₁, R₂₂, R₂₃, R₂₄ each independently represent a single bond or C(Y²)₂, and Y² each independently represents one of a hydrogen atom, a halogen atom, C1-C6 alkyl, C1-C6 haloalkyl, C1-C6 alkoxy, and C1-C6 haloalkoxy. R₂₁, R₂₂, R₂₃, R₂₄ may be the same or different.

R₃₁, R₃₂, R₃₃, R₃₄ each independently represent a single bond or C(Y³)₂, and Y³ each independently represents one of a hydrogen atom, a halogen atom, C1-C6 alkyl, C1-C6 haloalkyl, C1-C6 alkoxy, and C1-C6 haloalkoxy, in which R₃₁, R₃₂, R₃₃, and R₃₄ may be the same or different.

R₃₅ is absent or represents one of a single bond, an oxygen atom, C1-C6 alkylene, C1-C6 haloalkylene, C1-C6 oxa-alkylene.

In case that R₃₅ is absent, 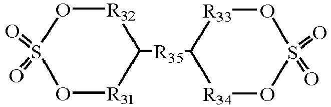 represents

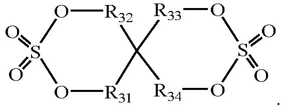

In case that R₃₅ represents a single bond, 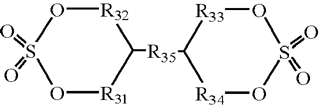 represents

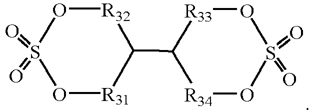

When the non-aqueous electrolytic solution contains the first additive shown in the above Formula 1, Formula 2, and Formula 3, it is capable of forming a layer of sulfur-containing polymer with strong lithium ion conductivity on the surface of the positive electrode active material during the charge process of the secondary battery, so as to enhance lithium ion conductivity of the positive electrode active material, and thereby further enhance capacity exertion and rate performance of the secondary battery.

In addition, the first additive can also coordinate with transition metals on the surface of the positive electrode active material and form a complex, so that interfacial film formed on the surface of the positive electrode active material is more dense and stable, thereby further reducing interfacial side reactions between the positive electrode active material and the non-aqueous electrolytic solution, further reducing leaching out of the manganese ions, and reducing production of gas. Since the first additive has a high reduction potential, it can also accept electrons from a negative electrode during a charge process and reduce itself, and preferentially form a dense and stable interfacial film on the surface of the negative electrode active material over an organic solvent, thereby reducing interfacial side reactions between the negative electrode active material and the non-aqueous electrolytic solution. Therefore, when the non-aqueous electrolytic solution comprises the first additive as shown by Formula 1, Formula 2 and Formula 3, the secondary battery may have a further improved cycle performance and storage performance.

Said first additive comprises one or more of the compounds shown in Formula 1, Formula 2, and Formula 3. Specifically, in some embodiments, said first additive comprises one or more of the compounds shown in formula 1; in some embodiments, said first additive comprises one or more of the compounds shown in formula 2; in some embodiments, said first additive comprises one or more of the compounds shown in formula 3; in some embodiments, said first additive comprises both the compounds shown in formula 1 and the compounds shown in Formula 2; in some embodiments, said first additive comprises the compounds shown in Formula 1 and the compounds shown in Formula 3; in some embodiments, said first additive comprises both the compounds shown in Formula 2 and the compounds shown in Formula 3; and in some embodiments, said first additive comprises both the compounds shown in Formula 1, the compounds shown in Formula 2, and the compounds shown in Formula 3.

In some embodiments of the present application, optionally, R₁₁ represents an oxygen atom or C(Y¹)₂, with Y¹ independently representing one of a hydrogen atom, a fluorine atom, methyl, ethyl, propyl, fluorinated methyl, fluorinated ethyl, fluorinated propyl, methoxy, ethoxy, and propoxy. More optionally, R₁₁ represents an oxygen atom or C(Y¹)₂, with Y¹ independently representing one of a hydrogen atom, a fluorine atom, methyl, ethyl, propyl, fluorinated methyl, fluorinated ethyl, and fluorinated propyl.

In some embodiments of the present application, optionally, R₁₂ each independently represents one of a hydrogen atom, a fluorine atom, methyl, ethyl, propyl, fluorinated methyl, fluorinated ethyl, fluorinated propyl, methoxy, ethoxy, and propoxy.

In some embodiments of the present application, optionally, R₁₃ each independently represents one of a hydrogen atom, a fluorine atom, methyl, ethyl, propyl, fluorinated methyl, fluorinated ethyl, fluorinated propyl, methoxy, ethoxy, and propoxy. More optionally, R₁₃ each independently represents one of a hydrogen atom, a fluorine atom, methyl, ethyl, propyl, fluorinated methyl, fluorinated ethyl, fluorinated propyl

In some embodiments of the present application, optionally, R₂₁, R₂₂, R₂₃, and R₂₄ independently represent a single bond or methylene (i.e. -CH₂-). More optionally, R₂₁, R₂₂, R₂₃, and R₂₄ are not all a single bond. Further optionally, one or both of R₂₁, R₂₂ are methylene, and one or both of R₂₃, R₂₄ are methylene.

For example, R₂₁ and R₂₃ are methylene, and R₂₂ and R₂₄ are a single bond. Alternatively, R₂₁ and R₂₄ are methylene and R₂₂ and R₂₃ are a single bond. Alternatively, R₂₁ and R₂₂ are both methylene, and one of R₂₃ and R₂₄ is methylene and the other is a single bond. Alternatively, R₂₁, R₂₂, R₂₃, and R₂₄ are all methylene.

In some embodiments of the present application, optionally, R₃₁, R₃₂, R₃₃, and R₃₄ independently represent a single bond or methylene, and R₃₁, R₃₂, R₃₃, and R₃₄ are not all a single bond.

In some embodiments of the present application, optionally, R₃₅ is absent or represents one of a single bond, an oxygen atom, methylene, ethylene, propylene, fluorinated methylene, fluorinated ethylene, fluorinated propylene, 2-oxa-1,3-propylene, 2-oxa-1,4-butylene, 3-oxa-1,5-pentylene. More optionally, R₃₅ is absent or represents one of a single bond, methylene, ethylene, propylene, 2-oxa-1,3-propylene. Further optionally, R₃₅ is a single bond.

In some embodiments, in the compounds shown in Formula 3, R₃₅ is a single bond, one or both of R₃₁ and R₃₂ are methylene, and the remaining substituents are a single bond. Alternatively, R₃₅ is a single bond, one or both of R₃₃ and R₃₄ are methylene, and the remaining substituents are a single bond.

In some embodiments, in the compounds shown in Formula 3, R₃₅ is a single bond, one of R₃₁ and R₃₂ is methylene, one of R₃₃ and R₃₄ is methylene, and the remaining substituents are a single bond.

In some embodiments, in the compounds shown in Formula 3, R₃₅ is a single bond, one of R₃₁ and R₃₂ is methylene, one of R₃₃ and R₃₄ is methylene, and the remaining substituents are a single bond. Alternatively, R₃₅ is a single bond, R₃₃ and R₃₄ are both methylene, one of R₃₁ and R₃₂ is methylene, and the remaining substituents are a single bond.

In some embodiments, in the compounds shown in Formula 3, R₃₅ is a single bond, and R₃₁, R₃₂, R₃₃, R₃₄ are all methylene.

In some embodiments, said first additive comprises at least one of the following compounds:

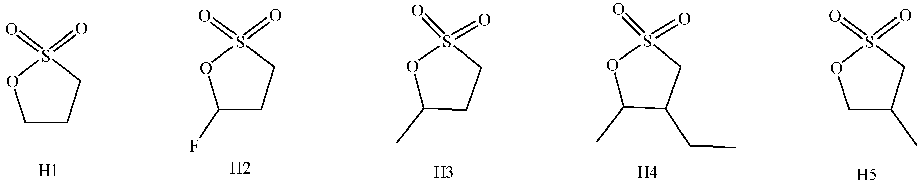

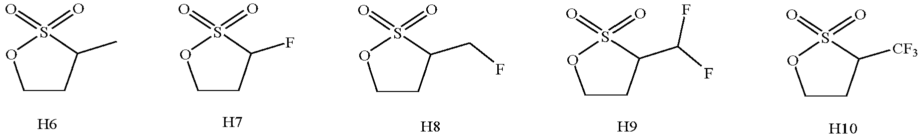

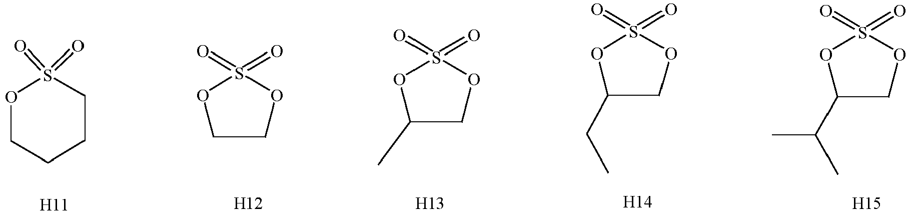

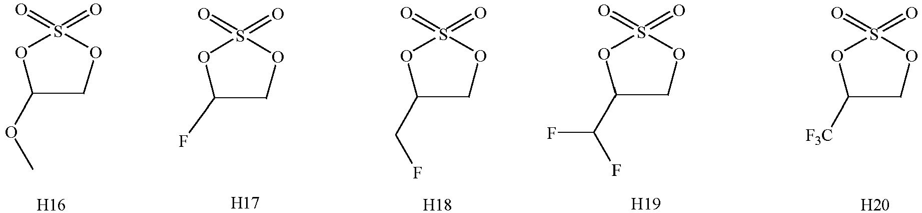

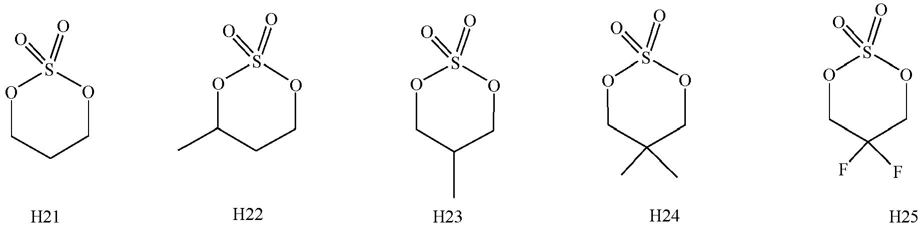

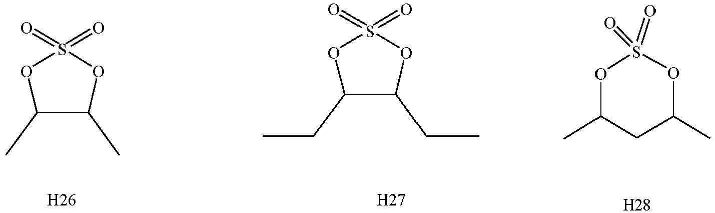

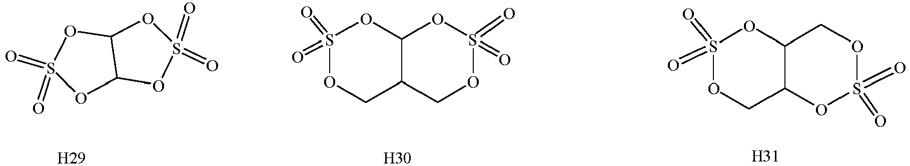

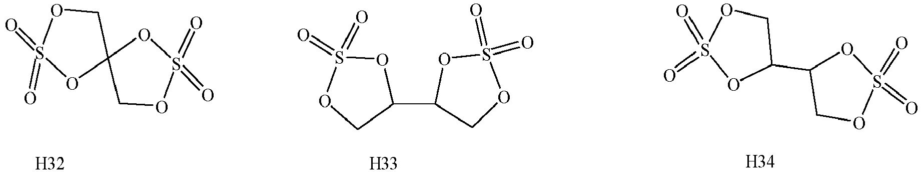

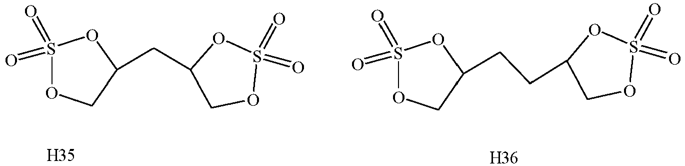

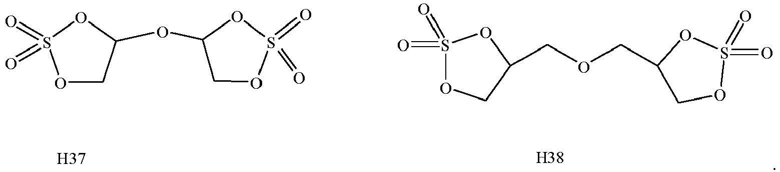

The inventors, after extensive research, found that with at least one of the above compounds as the first additive, it is capable of forming a more dense and stable interfacial film with stronger lithium ion conductivity on the surface of the positive electrode active material, and a more dense and stable interfacial film on the surface of the negative electrode active material, and even after a long period of charge and discharge, said positive and negative electrode interfacial film are still effective in preventing active materials from coming into contact with the non-aqueous electrolytic solution, thus effectively reducing leaching out of manganese ions and reducing gas production, further improving cycle performance and storage performance of the secondary battery.

The inventor also found that when the non-aqueous electrolytic solution contains too much of the first additive, interfacial impedance on the positive and negative electrodes will increase, and capacity exertion and rate performance of the secondary battery will be affected. Therefore, the content of the first additive in the non-aqueous electrolytic solution should not be too high. In some embodiments, the content of said first additive is W1% by weight, W1 being from 0.01 to 20, optionally from 0.1 to 10, and more optionally from 0.5 to 5, based on the total weight of said non-aqueous electrolytic solution. When the first additive content is within the above range, it can improve lithium ion conductivity of the lithium manganese phosphate positive electrode active material cladded with pyrophosphate without significantly increasing interfacial impedance on the positive and negative electrode, and thus the secondary battery is able to have a high capacity exertion and good rate performance, cycle performance and storage performance.

In some embodiments, said first cladding layer has a cladding amount of C1% by weight, said second cladding layer has a cladding amount of C2% by weight, and said first additive has a content of W1% by weight, which satisfy the relationship of W1/(C1+C2) of from 0.001 to 2, optionally from 0.01 to 1, and more optionally from 0.05 to 1. When W1/(C1+C2) is within the above ranges, the secondary battery is able to have higher capacity exertion and good rate performance, cycle performance and storage performance. And the following can be effectively avoided: when W1/(C1+C2) is small, there is not enough first additive to form a film on the surface of the positive electrode active materials, which cannot obviously improve lithium ion conductivity of the lithium manganese phosphate positive electrode active material cladded with pyrophosphate, so that improvement of rate performance of the secondary battery is not obvious; when W1/(C1+C2) is large, too much of the first additive will increase interfacial impedance on the positive and negative electrodes, affecting capacity exertion and rate performance of the secondary battery.

In some embodiments, the secondary battery has a liquid injection coefficient of Q0 in g/Ah with Q0 satisfying in the range of 2.5 to 4.0.

In some embodiments, said first additive has a content of W1% by weight, said secondary battery has an initial capacity of D0 in mAh/g, said secondary battery has a liquid injection coefficient of Q0 in g/Ah, and said positive electrode active material has a specific surface area of B in m²/g, which satisfy the relationship of (W1%×D0×Q0)/B of 0.002 to 10, optionally 0.01 to 5. When (W1%×D0×Q0)/B is in the above range, the secondary battery is capable of having high capacity exertion and good rate performance, cycle performance and storage performance. And the following can be effectively avoided: when (W1%×D0×Q0)/B is small, there is not enough first additive to form a film on the surface of the positive electrode active materials, which cannot obviously improve lithium ion conductivity of the lithium manganese phosphate positive electrode active material cladded with pyrophosphate, so that improvement of rate performance of the secondary battery is not obvious; when (W1%×D0×Q0)B is large, too much of the first additive will increase interfacial impedance on the positive and negative electrodes, affecting capacity exertion and rate performance of the secondary battery.

An initial capacity D0 in mAh/g of secondary batteries can be obtained by the following method. A secondary battery is charged to a charge cut-off voltage at 0.33C at a constant temperature of 25 °C and then is charged at constant voltage until current is less than or equal to 0.05mA. After that, the battery is allowed to stand for 5 minutes, and then is discharged to a discharge cut-off voltage at 0.33C, at which, a ratio of the discharge capacity to mass of the positive electrode active material is an initial capacity D0 in mAh/g of the secondary battery. In the test method of the present application, the charge and discharge cut-off voltage of the secondary battery may be 2.5V-4.3V.

Said non-aqueous electrolytic solution further comprises a lithium salt and an organic solvent. The present application has no particular limitation on the types of said lithium salt and said organic solvent, which may be selected according to actual needs.

As an example, said organic solvent may include one or more of chain carbonate, cyclic carbonate, carboxylic acid ester. Among them, the present application has no specific limitation on the types of said chain carbonate, said cyclic carbonate, and said carboxylic acid ester, which can be selected according to actual needs. Optionally, said organic solvent includes one or more of dimethyl carbonate (DMC), diethyl carbonate (DEC), dipropyl carbonate (DPC), methyl ethyl carbonate (EMC), methyl propyl carbonate (MPC), ethyl propyl carbonate (EPC), ethylene carbonate (EC), propylene carbonate (PC), butylene carbonate (BC), gamma-butyrolactone (GBL), methyl formate (MF), ethyl formate (EF), methyl acetate (MA), ethyl acetate (EA), propyl acetate (PA), methyl propionate (MP), ethyl propionate (EP), propyl propionate (PP), and tetrahydrofuran (THF).

As an example, said lithium salt may include one or more of LiN(CₘF₂ₘ₊₁SO₂)(CₙF₂ₙ₊₁SO₂), LiPF₆, LiBF₄, LiBOB, LiAsF₆, Li(FSO₂)₂N, LiCF₃SO₃, and LiClO₄, with m and n being natural numbers. When the non-aqueous electrolytic solution includes the lithium salt described above, this helps to form a dense, stable and low-impedance interfacial film on the surface of the positive electrode and/or negative electrode active materials, and effectively improves at least one of cycle performance, storage performance and rate performance of the secondary battery.

The cyclic carbonate has a higher dielectric constant, which facilitates dissociation of lithium salts. In some embodiments, said cyclic carbonate may be present in a content of 20 wt% or more, optionally from 20 wt% to 80 wt%, more optionally from 20 wt% to 50 wt%, based on the total weight of said organic solvent. Optionally, said cyclic carbonate includes one or more of ethylene carbonate (EC), propylene carbonate (PC), and butylene carbonate (BC).

The chain carbonate has a smaller dielectric constant and a weaker ability to dissociate lithium salts, but has a low viscosity and good fluidity and thus it can increase migration rate of lithium ions. In some embodiments, said chain carbonate may be present in a content of 10 wt% or more, optionally from 10 wt% to 80 wt%, based on the total weight of said organic solvent. Optionally, said chain carbonate comprises one or more of dimethyl carbonate (DMC), diethyl carbonate (DEC), dipropyl carbonate (DPC), methyl ethyl carbonate (EMC), methyl propyl carbonate (MPC), and ethyl propyl carbonate (EPC).

Carboxylic acid esters have advantages of low viscosity and high dielectric constant and thus it may enhance conductivity of a non-aqueous electrolytic solution. In some embodiments, said carboxylic acid ester may be present in a content of from 0 wt% to 70 wt%, optionally from 0 wt% to 60 wt%, based on the total weight of said organic solvent. Optionally, said carboxylic acid ester comprises one or more of methyl formate (MF), ethyl formate (EF), methyl acetate (MA), ethyl acetate (EA), propyl acetate (PA), methyl propionate (MP), ethyl propionate (EP), and propyl propionate (PP).

With increasing the content of lithium salts, the total number of migratable lithium ions increases, but at the same time, viscosity of the non-aqueous electrolytic solution will also increase, and migration rate of lithium ions slows down instead. Thus, an optimal value for the content of lithium salts occurs. In some embodiments, said lithium salt may be present in a content of from 6 wt% to 39 wt%, optionally from 10 wt% to 31 wt%, more optionally from 11 wt% to 24 wt%, based on the total weight of said non-aqueous electrolytic solution.

In some embodiments, said non-aqueous electrolytic solution further comprises a second additive, said second additive comprising one or more of a cyclic carbonate compound containing an unsaturated bond, a halogen-substituted cyclic carbonate compound, a nitrile compound, a phosphonitrile compound, an aromatic hydrocarbon and halogenated aromatic hydrocarbon compound, an anhydride compound, a phosphite compound, a phosphate compound, a borate compound, a sulfite compound, a methylene disulfonate compound, and an isocyanate compound. When the non-aqueous electrolytic solution comprises both the first additive and the second additive, the second additive helps to form a more dense and stable interfacial film on the surface of the positive electrode and/or negative electrode active materials, so as to be able to further enhance at least one of cycle performance, storage performance, rate performance, and safety performance of secondary batteries. In some embodiments, said second additive is present in a content of W2% by weight, with W2 being 20 or less, optionally from 0.1 to 10, more optionally from 0.5 to 5, based on the total weight of said non-aqueous electrolytic solution.

### (a) Cyclic carbonate compound containing carbon-carbon unsaturated bonds

The cyclic carbonate compound containing carbon-carbon unsaturated bonds may comprise one or more of the compounds shown in Formula 2-1. R₃₆ represents C1-C6 alkylene group with alkenyl or alkynyl substituents on its branched chain, or a substituted or unsubstituted C2-C6 straight-chain alkenylene group, wherein the substituent is one or more selected from a halogen atom, C1-C6 alkyl group, and a C2-C6 alkenyl group.

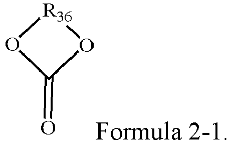

Optionally, the cyclic carbonate compound containing a carbon-carbon unsaturated bond may include, but is not limited to, one or more of the following compounds.

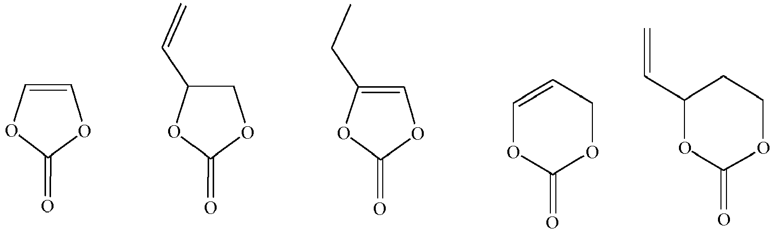

### (b) Halogen-substituted cyclic carbonate compound

The halogen-substituted cyclic carbonate compound may include one or more of the compounds shown in Formula 2-2. R₃₇ represents a halogen-substituted C1-C6 alkylene group, or a halogen-substituted C2-C6 alkenylene group.

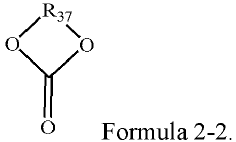

Optionally, the halogen-substituted cyclic carbonate compound may include, without being limited to, one or more of fluoro ethylene carbonate (FEC), fluoro propylene carbonate (FPC), trifluoro propylene carbonate (TFPC), and trans or cis-4,5-difluoro-1,3-dioxolan-2-one (hereinafter, both are collectively referred to as DFEC).

### (c) Nitrile compound

The nitrile compound may be a dinitrile or trinitrile compound. Optionally, the nitrile compound may comprise one or more of the compounds shown in Formulae 2-3 and Formulae 2-4. R₃₈ represents substituted or unsubstituted C1-C12 alkylene, substituted or unsubstituted C1-C12 oxa-alkylene, substituted or unsubstituted C2-C12 alkenylene, or substituted or unsubstituted C2-C12 alkynylene, and R₃₉ to R₄₁ each independently represent, substituted or unsubstituted C0-C12 alkylene, substituted or unsubstituted C1-C12 oxa-alkylene, substituted or unsubstituted C2-C12 alkenylene, or substituted or unsubstituted C2-C12 alkynylene, wherein the substituent is one or more selected from a halogen atom, a nitrile group, C1-C6 alkyl, C2-C6 alkenyl, and C1-C6 alkoxy.

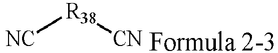

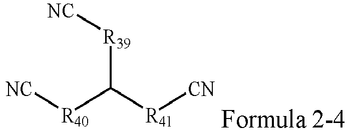

Optionally, the nitrile compound may include one or more of ethanedinitrile, propanedinitrile, butanedinitrile, pentanedinitrile, hexanedinitrile, heptanedinitrile, octanedinitrile, nonanedinitrile, decanedinitrile, undecanedinitrile, dodecanedinitrile, tetramethylsuccinonitrile, methylpentanedinitrile, butadienedinitrile, 2-pentenedinitrile, hex-2-enedinitrile, hex-3-enedinitrile, oct-4-enedinitrile, oct-4-ynedinitrile, 1,2,3-propane-tricarbonitrile, 1,3,5-pentanetri carbonitrile, 1,3,6-hexanetrinitrile.

### (d) Phosphonitrile compound

The phosphonitrile compound may be a cyclic phosphonitrile compound. The cyclic phosphonitrile compound may include one or more of methoxy pentafluorocyclotriphosphonitrile, ethoxy pentafluorocyclotriphosphonitrile, phenoxy pentafluorocyclotriphosphonitrile, and ethoxy heptafluorocyclotetraphosphonitrile. Optionally, the cyclic phosphonitrile compound may include one or more of methoxy pentafluorocyclotriphosphonitrile, ethoxy pentafluorocyclotriphosphonitrile, phenoxy pentafluorocyclotriphosphonitrile. Further optionally, the cyclic phosphonitrile compound may include methoxy pentafluorocyclotriphosphonitrile, ethoxy pentafluorocyclotriphosphonitrile, or a combination thereof.

### (e) Aromatic hydrocarbon and halogenated aromatic hydrocarbon compound

The aromatic hydrocarbon and halogenated aromatic hydrocarbon compound may include one or more of cyclohexylbenzene, fluorinated cyclohexylbenzene compounds (e.g., 1-fluoro-2-cyclohexylbenzene, 1-fluoro-3-cyclohexylbenzene, 1-fluoro-4-cyclohexylbenzene), t-butylbenzene, t-amylbenzene, 1-fluoro-4-t-butylbenzene, biphenyl, terphenyl (ortho-, meta-, para-), diphenyl ether, fluoro-benzene, difluorobenzene (ortho-, meta-, para-), anisole, 2,4-difluoroanisole, partial hydrides of terphenyl (e.g., 1,2-dicyclohexylbenzene, 2-phenylbicyclohexyl, 1,2-diphenylcyclohexane, o-cyclohexylbiphenyl). Optionally, the aromatic hydrocarbon and halogenated aromatic hydrocarbon compound may include one or more of biphenyl, terphenyl (ortho-, meta-, para-), fluorobenzene, cyclohexylbenzene, t-butylbenzene, t-amylbenzene. Further optionally, the aromatic hydrocarbon and halogenated aromatic hydrocarbon compound may include one or more of biphenyl, o-terphenyl, fluorobenzene, cyclohexylbenzene, and tert-pentylbenzene.

### (f) Acid anhydride compound

The acid anhydride compound may be a chain acid anhydride or a cyclic acid anhydride. Specifically, the acid anhydride compound may include one or more of acetic anhydride, propionic anhydride, succinic anhydride, maleic anhydride, 2-allyl succinic anhydride, glutaric anhydride, itaconic anhydride, and 3-sulfo-propionic anhydride. Optionally, the acid anhydride compound may include one or more of succinic anhydride, maleic anhydride, and 2-allyl succinic anhydride. Further optionally, the acid anhydride compound may include succinic anhydride, 2-allyl succinic anhydride, or a combination thereof. (g) Phosphite compound

The phosphite compound may be a silane phosphite compound, and specifically may include one or more of the compounds shown in Formulae 2-5, with R₄₂ to R₅₀ each independently representing halogen-substituted or unsubstituted C1-C6 alkyl.

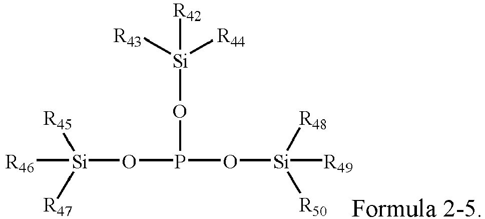

Optionally, the silane phosphite compound may include, but is not limited to, one or more of the following compounds.

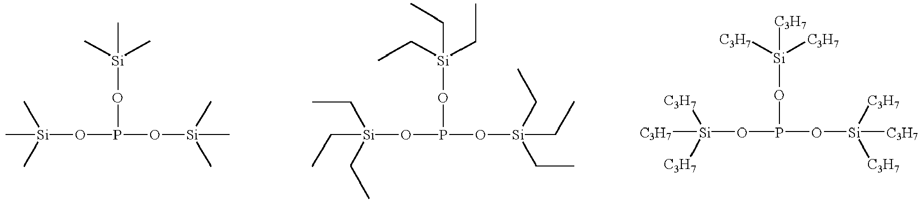

### (h) Phosphate ester compound

The phosphate ester compound may be a silane phosphate ester compound, and specifically may include one or more of the compounds shown in Formula 2-6, with R₅₁ to R₅₉ each independently representing halogen-substituted or unsubstituted C1-C6 alkyl.

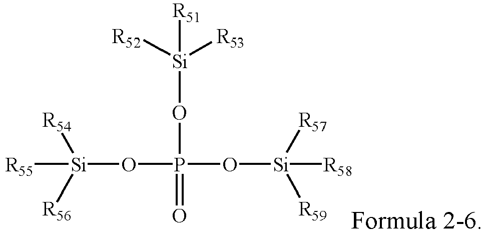

Optionally, the silane phosphate compound may include, but is not limited to, one or more of the following compounds.

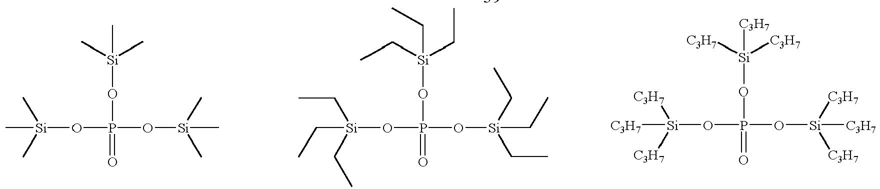

### (i) borate ester compound

The borate ester compound may be a silane borate ester compound, and specifically may include one or more of the compounds shown in Formula 2-7, with R₆₀ to R₆₈ each independently denoting halogen-substituted or unsubstituted C1-C6 alkyl.

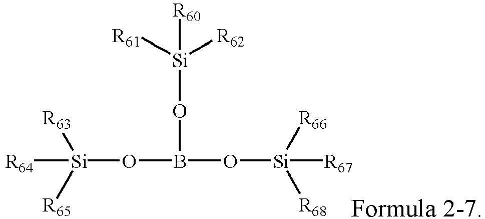

Optionally, the silane borate compound may include, but is not limited to, one or more of the following compounds:

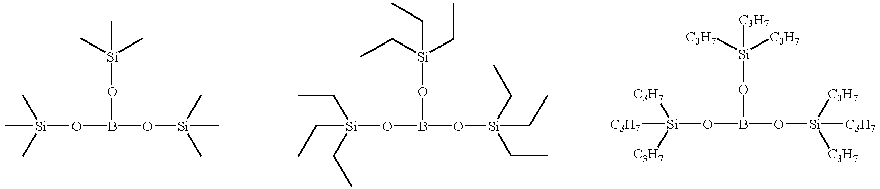

### (j) sulfite compound

The sulfite compound may be a cyclic sulfite compound, and specifically may include one or more of the compounds shown in Formulas 2-8. R₆₉ represents substituted or unsub stituted C1-C6 alkylene, substituted or unsubstituted C2-C6 alkenylene, wherein the substituent is one or more selected from a halogen atom, C1-C3 alkylene, and C2-C4 alkenylene.

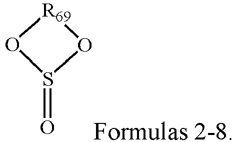

Optionally, the sulfite compound may include one or more of ethylene sulfite (ES), propylene sulfite (PS), butylene sulfite (BS).

### (k) Methylene disulfonate compound

The methylene disulfonate compound may include one or more of the compounds shown in Formulae 2-9. R₇₀ to R₇₃ each independently represent a hydrogen atom, a halogen atom, substituted or unsubstituted C1-C10 alkyl group, and substituted or unsubstituted C2-C10 alkenyl, wherein the substituent is one or more selected from a halogen atom, C1-C3 alkyl, and C2-C4 alkenyl.

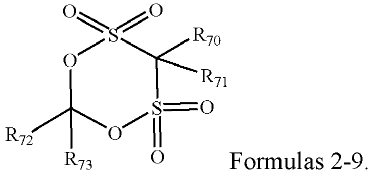

Optionally, the methylene disulfonate compound may include, but is not limited to, one or more of the following compounds.

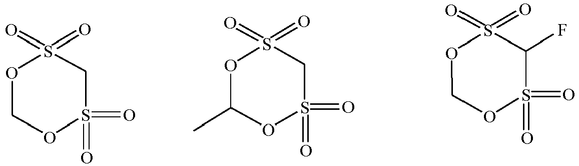

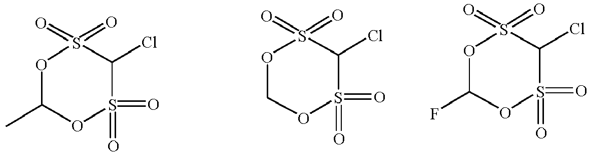

Further optionally, the methylene disulfonate compound may be methane methylene disulfonate.

### (l) Isocyanate compounds

The isocyanate compound may include one or more of methyl isocyanate, ethyl isocyanate, butyl isocyanate, phenyl isocyanate, tetramethylene diisocyanate, hexamethylene diisocyanate, octamethylene diisocyanate, 1,4-phenylene diisocyanate, 2-isocyanatoethyl acrylate, and 2-isocyanatoethyl methacrylate. Optionally, the isocyanate compound may comprise one or more of hexamethylene diisocyanate, octamethylene diisocyanate, 2-isocyanatoethyl acrylate, and 2-isocyanatoethyl methacrylate.

Optionally, said second additive may comprise one or more of vinylidene carbonate (VC), vinyl ethylene carbonate (VEC), fluorinated ethylene carbonate (FEC), ethanedinitrile, and ethoxy pentafluorocyclotriphosphonitrile. These additives are electrochemical reduction additives, and their reduction potential is higher than that of an organic solvent, so that electrochemical reduction can preferentially occur on the surface of the negative electrode active materials to form an interfacial membrane with excellent performances, thereby reducing destruction of the interfacial membrane by the organic solvent, and thus the secondary battery adopting the same can have better electrochemical performance and safety performance.

The non-aqueous electrolytic solution of the present application can be prepared in accordance with conventional methods in the field. For example, said additives, said organic solvent, said lithium salt and the like can be mixed well to obtain an non-aqueous electrolytic solution. There is no particular limitation on the order of addition of each material. For example, said additive, said lithium salt and the like can be added to said organic solvent and mixed homogeneously to obtain an non-aqueous electrolytic solution.

In the present application, components and their contents in said non-aqueous electrolytic solution can be determined according to methods conventional in the art. For example, they can be determined by gas chromatography-mass spectrometry (GC-MS), ion chromatography (IC), liquid chromatography (LC), nuclear magnetic resonance spectrometry (NMR) and the like.

It should be noted that the non-aqueous electrolytic solution of the present application can also be obtained from a secondary battery. An exemplary method of obtaining a non-aqueous electrolytic solution from a secondary battery comprises the step of discharging the secondary battery to a discharge cut-off voltage and then centrifuging it, after which an appropriate amount of liquid obtained from centrifugation is taken for testing.

### [Outer package]

In some embodiments, said secondary battery may include an outer package. The outer package may be used to encapsulate said electrode assembly and a non-aqueous electrolytic solution.

In some embodiments, said outer package of said secondary battery may be a hard case, such as a hard plastic case, an aluminum case, a steel case, and the like. The outer package of the secondary battery may also be a soft package, such as a pouch-type soft package. Material of the soft bag can be plastic, such as at least one of polypropylene (PP), polybutylene terephthalate (PBT), and polybutylene succinate (PBS).

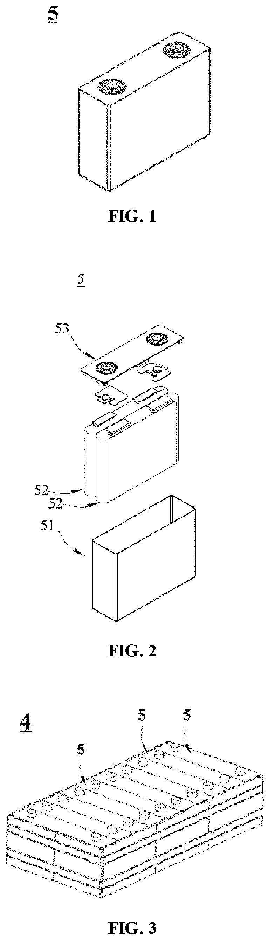

The shape of the secondary battery is not particularly limited in the present application, and it may be cylindrical, square, rectangular or any other shape. FIG. 1 is a schematic diagram of a secondary battery 5 of a rectangular structure as an example.

In some embodiments, as shown in FIG. 2, the outer package may include a casing 51 and a cover plate 53, wherein the casing 51 may include a bottom plate and side plates connected to the bottom plate, and the bottom plate and the side plates are enclosed to form an accommodating cavity. The casing 51 has an opening communicating with the accommodating cavity, and the cover plate 53 is used to cover the opening to close the accommodating cavity. A positive electrode plate, a separator, and a negative electrode plate may be made into an electrode assembly 52 by a winding process or a stacking process. The electrode assembly 52 is packaged in the accommodating cavity, and the non-aqueous electrolytic solution is infiltrated in the electrode assembly 52. The number of electrode assemblies 52 contained in the secondary battery 5 may be one or more, and may be adjusted according to requirements.

A process for preparing the secondary battery of the present application is well known in the art. In some embodiments, a positive electrode plate, a separator, a negative electrode plate and a non-aqueous electrolytic solution may be assembled into a secondary battery. As an example, a positive electrode plate, a separator, and a negative electrode plate can be made into an electrode assembly by a winding process or a laminating process, and the electrode assembly can be placed in an outer package and is subjected to drying, to which a non-aqueous electrolytic solution is injected. After vacuum encapsulation, resting, chemical formation, and shaping process, a secondary battery can be obtained.

### Battery Module

In some embodiments, the secondary batteries according to the present application can be assembled into a battery module, and the number of secondary batteries contained in the battery module can be more than one, and the specific number can be adjusted according to application and capacity of the battery module.

FIG. 3 is a schematic diagram of the battery module 4 as an example. As shown in FIG. 3, in the battery module 4, a plurality of secondary batteries 5 may be arranged in sequence along the longitudinal direction of the battery module 4. Certainly, they can also be arranged in any other manner. Furthermore, a plurality of secondary batteries 5 can be fixed with fasteners.

Optionally, the battery module 4 may further include a housing having an accommodating space in which a plurality of secondary batteries 5 are accommodated.

### Battery pack

In some embodiments, the above-mentioned battery modules can also be assembled into a battery pack, and the number of battery modules included in the battery pack can be adjusted according to the application and capacity of the battery pack.

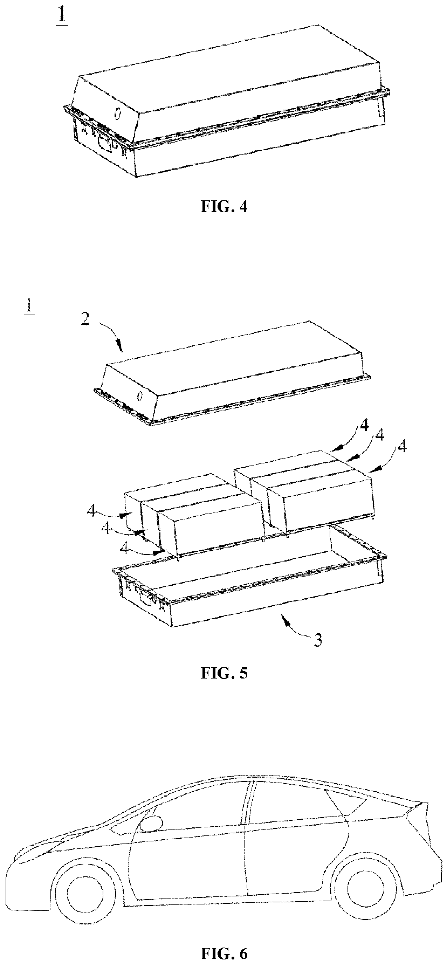

FIGS. 4 and 5 are schematic diagrams of the battery pack 1 as an example. As shown in FIGS. 4 and 5, the battery pack 1 may include a battery case and a plurality of battery modules 4 provided in the battery case. The battery box includes an upper case body 2 and a lower case body 3, and the upper case body 2 is used to cover the lower case body 3 to form a closed space for accommodating the battery modules 4. A plurality of battery modules 4 may be arranged in the battery case in any manner.

### Electrical device

The present application further provides an electrical device comprising at least one of the secondary battery, battery module, and battery pack of the present application. The secondary battery, battery module or battery pack can be used as a power source of the electrical device, and can also be used as an energy storage unit of the electrical device. The electrical device can be, but is not limited to, a mobile device (e.g., a mobile phone, a notebook computer, and the like), an electric vehicle (e.g., a pure electric vehicle, a hybrid electric vehicle, a plug-in hybrid electric vehicle, an electric bicycle, an electric scooter, an electric golf vehicle, an electric truck and the like), an electric train, a ship, a satellite, an energy storage system, and the like.

The electrical device can select a secondary battery, a battery module or a battery pack according to its usage requirements.

FIG. 6 is a schematic diagrams of an electrical device as an example. The electrical device is a pure electric vehicle, a hybrid electric vehicle, or a plug-in hybrid electric vehicle. In order to meet high power and high energy density requirements of the electrical device, a battery pack or a battery module can be used.

As another example, the electrical device may be a mobile phone, a tablet computer, a notebook computer, and the like. The electric device is generally required to be light and thin, and a secondary battery can be used as a power source.

### Examples

The following examples more specifically describe the content disclosed in the present application, and these examples are only used for explanatory description, because various modifications and changes within the scope of the present disclosure are apparent to those skilled in the art. Unless otherwise stated, all parts, percentages, and ratios described in the following examples are based on mass, and all reagents used in the examples are commercially available or synthesized according to conventional methods and can be directly used without further treatment, and all instruments used in the examples are commercially available.

The sources of raw materials involved in examples of the present application are as follows:

| Name | Chemical Formula | Supplier | Specification |
|---|---|---|---|
| Manganese Carbonate | MnCO₃ | Shandong West Asia Chemical Industry Co. | 1Kg |
| Lithium Carbonate | Li₂CO₃ | Shandong West Asia Chemical Industry Co. | 1Kg |
| Magnesium carbonate | MgCO₃ | Shandong West Asia Chemical Industry Co. | 1Kg |
| Zinc Carbonate | ZnCO₃ | Wuhan Xinru Chemical Co. | 25Kg |
| Ferrous Carbonate | FeCO₃ | Xi'an Lanzhiguang Fine Material Co. | 1Kg |
| Nickel Sulfate | NiCO₃ | Shandong West Asia Chemical Industry Co. | 1Kg |
| Titanium Sulfate | Ti(SO₄)₂ | Shandong West Asia Chemical Industry Co. | 1Kg |
| Cobalt Sulfate | CoSO₄ | Xiamen Zhixin Chemical Co. | 500g |
| Vanadium Dichloride | VCl₂ | Shanghai Jin Jin Le Industry Co. | 1Kg |
| Oxalic acid dihydrate | C₂H₂O₄^{•}2H₂O | Shanghai Jin Jin Le Industry Co. | 1Kg |
| Ammonium dihydrogen phosphate | NH₄H₂PO₄ | Shanghai Chengshao Biotechnology Co. | 500g |
| Sucrose | C₁₂H₂₂O₁₁ | Shanghai Yuanye Biotechnology Co. | 100g |
| Sulfuric acid | H₂SO₄ | Shenzhen Haisian Biotechnology Co. | In a mass percentage of 60% |
| Nitric acid | HNO₃ | Anhui Lingtian Fine Chemical Co. | In a mass percentage of 60% |
| Silicic acid | H₂SiO₃ | Shanghai Yuanye Biotechnology Co. | 100g |
| Boric acid | H₃BO₃ | Changzhou Qidi Chemical Co. | 1Kg |

### Example 1-1

### Preparation of positive active materials

### 1) Preparation of co-doped lithium manganese phosphate core

Preparation of Fe, Co and V codoped manganese oxalate: 689.5 g of manganese carbonate (as MnCO₃, hereinafter the same), 455.2 g of ferrous carbonate (as FeCO₃, hereinafter the same), 4.6 g of cobalt sulphate (as CoSO₄, hereinafter the same), and 4.9 g of vanadium dichloride (as VCl₂, hereinafter the same) were thoroughly mixed for 6 hr in a mixer. The mixture was transferred to a reactor to which 5 liters of deionized water and 1260.6 g of oxalic acid dihydrate (as C₂H₂O₄.2H₂O, hereinafter the same) were added. The reaction kettle was heated to 80 °C and the content was stirred at 600 rpm for 6 hours until the reaction was terminated (no bubbles were generated) to obtain a Fe, Co, V and S co-doped manganese oxalate suspension. Said suspension was then filtered and the filter cake was dried at 120°C, after which it was milled to obtain Fe, Co and V co-doped manganese oxalate dihydrate particles with a median particle size Dv50 of 100 nm.

Preparation of Fe, Co, V and S co-doped lithium manganese phosphate: the manganese oxalate dihydrate particles (1793.4 g) obtained in the previous step, 369.0 g of lithium carbonate (as Li₂CO₃, hereinafter the same), 1.6 g of diluted sulfuric acid (as 60% H₂SO₄, hereinafter the same) at a concentration of 60% and 1148.9 g of ammonium dihydrogen phosphate (as NH₄H₂PO₄, hereinafter the same) were added to 20 liters of deionized water, and the mixture was stirred for 10 hours to homogenize the mixture to obtain a slurry. Said slurry was transferred to a spray drying apparatus for spray drying and granulation with a drying temperature set at 250°C for 4 hours to obtain powder. In a protective atmosphere of nitrogen (90 vol%) + hydrogen (10 vol%), the said powder was sintered at 700°C for 4 hours to obtain 1572.1 g of Fe, Co, V and S co-doped lithium manganese phosphate.

### (2) Preparation of lithium iron pyrophosphate and lithium iron phosphate

Preparation of lithium iron pyrophosphate powder: 4.77 g of lithium carbonate, 7.47 g of ferrous carbonate, 14.84 g of ammonium dihydrogen phosphate and 1.3 g of oxalic acid dihydrate were dissolved in 50 mL of deionized water. The mixture had a pH of 5. The reaction mixture was allowed to fully react with stirring for 2 hours. The reacted solution was then warmed to 80 °C and maintained at that temperature for 4 h to obtain a suspension comprising Li₂FeP₂O₇. The suspension was filtered, and the resulting filter cake was washed with deionized water and dried at 120 °C for 4 h to obtain a powder. The said powder was sintered at 650°C under nitrogen atmosphere for 8 hours and subjected to milling after it was naturally cooled to room temperature, thereby obtaining Li₂FeP₂O₇ powder.

Preparation of lithium iron phosphate suspension: 11.1 g of lithium carbonate, 34.8 g of ferrous carbonate, 34.5 g of ammonium dihydrogen phosphate, 1.3 g of oxalic acid dihydrate, and 74.6 g of sucrose (as C₁₂H₂₂O₁₁, hereinafter the same) were dissolved in 150 mL of deionized water to obtain a mixture. The reaction mixture was allowed to fully react with stirring for 6 hours. The reacted solution was then warmed to 120 °C and maintained at that temperature for 6 h to obtain a suspension containing LiFePO₄.

### (3) Cladding

1572.1 g of the above Fe, Co, V and S co-doped lithium manganese phosphate (core) and 15.72 g of the above lithium iron pyrophosphate (Li₂FeP₂O₇) powder were added to the lithium iron phosphate (LiFePO₄) suspension prepared in the previous step, which was mixed well with stirring and then transferred to a vacuum oven to be dried for 6 hrs at 150 °C. The resulting product was then dispersed by sanding. After dispersion, the obtained product was sintered in a nitrogen atmosphere at 700° C for 6 hours to obtain the target product of lithium manganese phosphate with a double cladding layer structure.

### Preparation of positive electrode plate

The lithium manganese phosphate positive electrode active material with a double cladding layer structure prepared above, acetylene black as a conductive agent, and polyvinylidene fluoride (PVDF) as a binder were added to N-methylpyrrolidone (NMP) at a weight ratio of 92:2.5:5.5 with stirring until these materials were mixed homogeneously to obtain a positive electrode slurry. The positive electrode slurry was then uniformly applied to an aluminum foil at 0.280 g/1540.25 mm², and then dried, cold pressed, and slit to obtain a positive electrode plate.

### Preparation of negative electrode plate

Artificial graphite as a negative active material, hard carbon, acetylene black as a conductive agent, styrene butadiene rubber (SBR) as a binder, sodium carboxymethyl cellulose (CMC) as a thickener at a weight ratio of 90:5:2:2:1 were dissolved in a solvent deionized water, which was stirred and mixed well to prepare a negative electrode slurry. The negative electrode slurry was uniformly applied to a copper foil as a current collector at 0.117 g/1540.25 mm², and then dried, cold pressed, and slit to obtain a negative electrode plate.

### Preparation of non-aqueous electrolytic solution

In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 2 wt% (based on the total weight of the non-aqueous electrolytic solution) of compound H12 were dissolved, and the resulting mixture was stirred homogeneously, to obtain a non-aqueous electrolytic solution.

### Separator

A commercially available PP-PE copolymer microporous film with a thickness of 20 µm and an average pore size of 80 nm was used (from Trico Electronic Technology, model 20).

### Preparation of full battery

The positive electrode plate, separator and negative electrode plate were stacked in order, so that the separator was sandwiched between the positive and negative electrodes for isolation, and then they were wound to form an electrode assembly. The electrode assembly was placed in an outer package, filled with the above non-aqueous electrolytic solution, and encapsulated to obtain a full battery. The full battery has a liquid injection coefficient of 3.5 g/Ah.

### Preparation of button battery

The lithium manganese phosphate positive electrode active material with a double cladding layer structure prepared above, PVDF, and acetylene black were added to NMP at a weight ratio of 90: 5: 5 and stirred in a drying room to make a slurry. The above slurry was applied to an aluminum foil, dried and cold pressed to form a positive electrode plate. The cladding amount was 0.2g/cm² and the compaction density was 2.0g/cm³.

Lithium plate was used as a negative electrode, it was assembled together with the above prepared positive electrode plate and the non-aqueous electrolytic solution in a button battery box to form a button battery (hereinafter also referred to as "button").

### Examples 1-2 to 1-33

Examples 1-2 to 1-33 were the same as Example 1-1 in terms of the preparation of positive electrode plate, preparation of negative electrode plate, preparation of non-aqueous electrolytic solution, preparation of separator and preparation of battery with the exception for the preparation of positive electrode active materials.

### Examples 1-2 to 1-6

In the preparation of co-doped lithium manganese phosphate cores, the conditions for the preparation of lithium manganese phosphate cores in Examples 1-2 to 1-6 were the same as those in Example 1-1 with the exception that vanadium dichloride and cobalt sulfate were not used, and that 463.4 g of ferrous carbonate, 1.6 g of dilute sulfuric acid at a concentration of 60%, 1148.9 g of ammonium dihydrogen phosphate, and 369.0 g of lithium carbonate were used.

In addition, in the preparation of lithium iron pyrophosphate and lithium iron phosphate and in the process of cladding the first cladding layer and the second cladding layer, other conditions were the same as those in Example 1-1 except that the raw materials used were adjusted according to ratios of their cladding amounts as shown in Table 1 to the cladding amount corresponding to Examples 1-1, so that the amounts of Li₂FeP₂O₇/LiFePO₄ in Examples 1-2 to 1-6 were respectively 12.6 g/37.7 g, 15.7 g /47.1 g, 18.8 g/56.5 g, 22.0/66.0 g, and 25.1 g/75.4 g, and the amount of sucrose in Examples 1-2 to 1-6 was 37.3 g.

### Examples 1-7 to 1-10

The conditions in Examples 1-7 to 1-10 were the same as those in Example 1-3 with the exception that the amount of sucrose was 74.6 g, 149.1 g, 186.4 g, and 223.7 g, respectively, so that the corresponding amounts of carbon layer as a second cladding layer were 31.4 g, 62.9 g, 78.6 g, and 94.3 g, respectively.

### Examples 1-11 to 1-14

The conditions in Examples 1-11 to 1-14 were the same as those in Example 1-7 with the exception that in the preparation of lithium iron pyrophosphate and lithium iron phosphate, the amounts of various raw materials were adjusted according to the cladding amounts shown in Table 1 so that the amounts of Li₂FeP₂O₇/LiFePO₄ were 23.6g/39.3g, 31.4g/31.4g, 39.3g/23.6g, and 47.2g/15.7g, respectively.

### Example 1-15

The conditions in Example 1-15 was the same as those in Example 1-14 with the exception that in the preparation of co-doped lithium manganese phosphate core, 492.80 g of zinc carbonate was used instead of ferrous carbonate.

### Examples 1-16 to 1-18

The conditions in Examples 1-16 to 1-18 were the same as those in Example 1-7 with the exception that in the preparation of co-doped lithium manganese phosphate core of Example 1-16, 466.4 g of nickel carbonate, 5.0 g of zinc carbonate, and 7.2 g of titanium sulfate were used instead of ferrous carbonate; in the preparation of co-doped lithium manganese phosphate core of Example 1-17, 455.2 g of ferrous carbonate and 8.5 g of vanadium dichloride were used; and in the preparation of co-doped lithium manganese phosphate core, 455.2 g of ferrous carbonate, 4.9 g of vanadium dichloride and 2.5 g of magnesium carbonate were used.

### Examples 1-19 to 1-20

The conditions in Examples 1-19 to 1-20 were the same as those in Example 1-18 with the exception that in the preparation of co-doped lithium manganese phosphate core of Example 1-19, 369.4 g of lithium carbonate was used, and 1.05 g of dilute nitric acid at a concentration of 60% was used instead of dilute sulfuric acid; and in the preparation of co-doped lithium manganese phosphate core of Example 1-20, 369.7 g of lithium carbonate was used, and 0.78 g of silicic acid was instead of dilute sulfuric acid.

### Examples 1-21 to 1-22

The conditions in Examples 1-21 to 1-22 were the same as those in Example 1-20 with the exception that in the preparation of co-doped lithium manganese phosphate core of Example 1-21, 632.0 g of manganese carbonate, 463.30 g of ferrous carbonate, 30.5 g of vanadium dichloride, 21.0 g of magnesium carbonate, and 0.78 g of silicic acid were used; and in the preparation of co-doped lithium manganese phosphate core of Example 1-22, 746.9 g of manganese carbonate, 289.6 g of ferrous carbonate, 60.9 g of vanadium dichloride, 42.1 g of magnesium carbonate, and 0.78 g of silicic acid were used.

### Examples 1-23 to 1-24

The conditions in Examples 1-23 to 1-24 were the same as those in Example 1-22 with the exception that in the preparation of the co-doped lithium manganese phosphate core of Example 1-23, 804.6 g of manganese carbonate, 231.7 g of ferrous carbonate, 1156.2 g of ammonium dihydrogen phosphate, 1.2 g of boric acid (in a mass fraction of 99.5%), and 370.8 g of lithium carbonate were used; and in the preparation of the co-doped lithium manganese phosphate core of Example 1-24, 862.1 g of manganese carbonate, 173.8 g of ferrous carbonate, 1155.1 g of ammonium dihydrogen phosphate, 1.86 g of boric acid (in a mass fraction of 99.5%), and 371.6 g of lithium carbonate were used.

### Examples 1-25

The conditions in Example 1-25 was the same as those in Example 1-20 with the exception that in the preparation of the co-doped lithium manganese phosphate core of Example 1-25, 370.1 g of lithium carbonate, 1.56 g of silicic acid and 1147.7 g of ammonium dihydrogen phosphate were used.

### Examples 1-26

The conditions in Example 1-26 was the same as those in Example 1-20 with the exception that in the preparation of the co-doped lithium manganese phosphate core of Example 1-26, 368.3 g of lithium carbonate, 4.9 g of dilute sulfuric acid at 60% by mass, 919.6 g of manganese carbonate, 224.8 g of ferrous carbonate, 3.7 g of vanadium dichloride, 2.5 g of magnesium carbonate and 1146.8 g of ammonium dihydrogen phosphate were used.

### Examples 1-27

The conditions in Example 1-27 was the same as those in Example 1-20 with the exception that in the preparation of the co-doped lithium manganese phosphate core of Example 1-27, 367.9 g of lithium carbonate, 6.5 g of dilute sulfuric acid at a concentration of 60% and 1145.4 g of ammonium dihydrogen phosphate were used.

### Examples 1-28 to 1-33

The conditions in Examples 1-28 to 1-33 were the same as those in Example 1-20 with the exception that in the preparation of the co-doped lithium manganese phosphate core of Example 1-28 to 1-33, 1034.5g of manganese carbonate, 108.9g of ferrous carbonate, 3.7g of vanadium dichloride and 2.5g of magnesium carbonate were used, lithium carbonate was used in an amount of 367.6g, 367.2g, 366.8g, 366.4g, 366.0g and 332.4g, respectively, ammonium dihydrogen phosphate was used in an amount of 1144.5g, 1143.4g, 1142.2g, 1141.1g, 1139.9g and 1138.8g, respectively, and dilute sulfuric acid with a concentration of 60% was used in an amount of 8.2g, 9.8g, 11.4g, 13.1g, 14.7g and 16.3g, respectively.

Examples 2-1 to 2-3 were the same as Example 1-1 in terms of the preparation of positive electrode plate, preparation of negative electrode plate, preparation of non-aqueous electrolytic solution, preparation of separator and preparation of battery with the exception for the preparation of positive electrode active materials.

### Example 2-1

Example 2-1 was the same as Example 1-1 with the exception that in the preparation of lithium iron pyrophosphate (Li₂FeP₂O₇), the sintering temperature in the powder sintering step was 550°C and the sintering time was 1 hour to control the crystallinity of Li₂FeP₂O₇ to be 30%, and in the preparation of lithium iron phosphate (LiFePO₄) the sintering temperature in the cladding sintering step was 650°C and the sintering time was 2 hours to control the crystallinity of LiFePO₄ to be 30%.

### Example 2-2

Example 2-2 was the same as Example 1-1 with the exception that in the preparation of lithium iron pyrophosphate (Li₂FeP₂O₇), the sintering temperature in the powder sintering step was 550°C and the sintering time was 2 hours to control the crystallinity of Li₂FeP₂O₇ to be 50%, and in the preparation of lithium iron phosphate (LiFePO₄) the sintering temperature in the cladding sintering step was 650°C and the sintering time was 3 hours to control the crystallinity of LiFePO₄ to be 50%.

### Example 2-3

Example 2-3 was the same as Example 1-1 with the exception that in the preparation of lithium iron pyrophosphate (Li₂FeP₂O₇), the sintering temperature in the powder sintering step was 600°C and the sintering time was 3 hours to control the crystallinity of Li₂FeP₂O₇ to be 70%, and in the preparation of lithium iron phosphate (LiFePO₄) the sintering temperature in the cladding sintering step was 650°C and the sintering time was 4 hours to control the crystallinity of LiFePO₄ to be 70%.

Examples 3-1 to 3-24 were the same as Example 1-1 in terms of the preparation of positive electrode active material, preparation of positive electrode plate, preparation of negative electrode plate, preparation of non-aqueous electrolytic solution, preparation of separator and preparation of battery with the exception for the preparation of non-aqueous electrolytic solution. The preparation process of the non-aqueous electrolytic solution were listed in table 2 in detail.

Comparative Examples 1 to 8 were the same as Example 1-1 in terms of the preparation of positive electrode plate, preparation of negative electrode plate, preparation of separator and preparation of battery with the exception for the preparation of positive electrode active materials and the preparation of non-aqueous electrolytic solution. The preparation process of the non-aqueous electrolytic solution were listed in table 2 in detail.

### Comparative Example 1

Preparation of manganese oxalate: 1149.3 g of manganese carbonate was added to a reaction kettle and 5 L of deionized water and 1260.6 g of oxalic acid dihydrate (as C₂H₂O₄•2H₂O, hereinafter the same) were added. The reaction kettle was heated to 80°C and stirred at 600 rpm for 6 h until the reaction terminated (no bubbles were generated) and a suspension of manganese oxalate was obtained. Then the suspension was filtered and the resulting filter cake was dried at 120°C, after which it was ground to obtain particles of manganese oxalate with a median particle size Dv₅₀ of 100 nm.

Preparation of lithium manganese phosphate cladded with carbon: 1789.6 g of the above particles of manganese oxalate dihydrate, 369.4 g of lithium carbonate (as Li₂CO₃, hereinafter the same), 1150.1 g of ammonium dihydrgen phosphate (as NH₄H₂PO₄, hereinafter the same) and 31 g of sucrose (as C₁₂H₂₂O₁₁, hereinafter the same) were added to 20 litres of deionized water. The mixture was stirred for 10 hours homogeneously to obtain a slurry. Said slurry was transferred to a spray drying equipment for spray drying granulation, with a drying temperature of 250°C for 4 hours to obtain powders. The above powder was sintered at 700°C for 4 hours in a protective atmosphere of nitrogen (90 vol%) + hydrogen (10 vol%) to obtain lithium manganese phosphate cladded with carbon.

Preparation of non-aqueous electrolytic solution: In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ was dissolved, and the resulting mixture was stirred homogeneously, to obtain a non-aqueous electrolytic solution.

### Comparative Example 2

The conditions in Comparative Example 2 was the same as those in Comparative Example 1 with the exception that 689.5 g of manganese carbonate was used and 463.3 g of ferrous carbonate was additionally added.

### Comparative Example 3

The conditions in Comparative Example 3 was the same as those in Comparative Example 1 with the exception that 1148.9 g of ammonium dihydrogen phosphate and 369.0 g of lithium carbonate were used, and 1.6 g of dilute sulfuric acid at a concentration of 60% was additionally added.

### Comparative Example 4

The conditions in Comparative Example 4 was the same as those in Comparative Example 1 with the exception that 689.5 g of manganese carbonate, 1148.9 g of ammonium dihydrogen phosphate and 369.0 g of lithium carbonate were used and 463.3 g of ferrous carbonate and 1.6 g of dilute sulfuric acid at a concentration of 60% were additionally added.

### Comparative Example 5

The conditions in Comparative Example 5 was the same as those in Comparative Example 4 with the exception that the following steps were additionally added. Preparation of lithium iron pyrophosphate powder: 9.52 g of lithium carbonate, 29.9 g of ferrous carbonate, 29.6 g of ammonium dihydrogen phosphate and 32.5 g of oxalic acid dihydrate were dissolved in 50 mL of deionized water. The mixture had a pH of 5. The reaction mixture was allowed to fully react with stirring for 2 hours. The reacted solution was then warmed to 80 °C and maintained at that temperature for 4 h to obtain a suspension comprising Li₂FeP₂O₇, which was filtered. The resulting filter cake was washed with deionized water and dried at 120 °C for 4 h to obtain powder. Said powder was sintered at 500°C under a nitrogen atmosphere for 4 hours and naturally cooled it to room temperature and then ground so as to the crystallinity of Li₂FeP₂O₇ was controlled to be 5%, and in the preparation of carbon cladding materials, the amount of Li₂FeP₂O₇ was 62.8g.

### Comparative Example 6

The conditions in Comparative Example 6 was the same as those in Comparative Example 4 with the exception that the following steps were additionally added. Preparation of suspension of lithium iron phosphate: 14.7 g of lithium carbonate, 46.1 g of ferrous carbonate, 45.8 g of ammonium dihydrogen phosphate, and 50.2 g of oxalic acid dihydrate were dissolved in 500 mL of deionized water and then it was allowed to fully react with stirring for 6 hours. The reacted solution was then heated to 120°C and maintained at that temperature for 6 hours to obtain a suspension comprising LiFePO₄. In the preparation of lithium iron phosphate (LiFePO₄), the sintering temperature in the cladding sintering step was 600°C and the sintering time in the cladding sintering step was 4 hours to control the crystallinity of LiFePO₄ to 8%, and in the preparation of carbon cladding materials, the amount of LiFePO₄ was 62.8g.

### Comparative Example 7

Preparation of lithium iron pyrophosphate powder: 2.38 g of lithium carbonate, 7.5 g of ferrous carbonate, 7.4 g of ammonium dihydrogen phosphate and 8.1 g of oxalic acid dihydrate were dissolved in 50 mL of deionized water. The mixture has a pH of 5. The reaction mixture was allowed to fully react with stirring for 2 hours. The reacted solution was then warmed to 80 °C and maintained at that temperature for 4 h to obtain a suspension comprising Li₂FeP₂O₇, which was filtered. The resulting filter cake was washed with deionized water and dried at 120 °C for 4 h h to obtain a powder. Said powder was sintered at 500 °C under nitrogen atmosphere for 4 h and ground after it was naturally cooled to room temperature, so as to control the crystallinity of Li₂FeP₂O₇ to be 5%.

Preparation of lithium iron phosphate suspension: 11.1 g of lithium carbonate, 34.7 g of ferrous carbonate, 34.4 g of ammonium dihydrogen phosphate, 37.7 g of oxalic acid dihydrate, and 37.3 g of sucrose (as C₁₂H₂₂O₁₁, hereinafter the same) were dissolved in 1,500 mL of deionized water, and then the mixture was allowed to fully react with stirring for 6 hours. The reacted solution was then warmed to 120 °C and maintained at that temperature for 6 hours to obtain a suspension containing LiFePO₄.

Other conditions of Comparative Example 7 was the same as those of Comparative Example 4 with the exception that 15.7 g of the obtained lithium iron pyrophosphate powder was added to the suspension of lithium iron phosphate (LiFePO₄) and sucrose described above, and the sintering temperature in the cladding and sintering step of the preparation process was 600°C, and the sintering time was 4 hours to control the crystallinity of LiFePO₄ to be 8%, thereby obtaining positive electrode active materials of amorphous lithium iron pyrophosphate, amorphous lithium iron phosphate, with carbon cladding.

### Comparative Example 8

Comparative Example 8 was the same as Example 1-3 with the exception that no compound H12 was added in the preparation of a non-aqueous electrolytic solution.

### Test methods for related performance parameters

### 1. Determination of the chemical formula of core and the composition of different cladding layer

The internal microstructure and surface structure of the positive electrode active material were characterized with high spatial resolution by a spherical Aberration Corrected Scanning Transmission Electron Microscope (ACSTEM). By combining with a three-dimensional reconstruction technology, the chemical formula of the core and the composition of the first cladding layer and the second cladding layer of the positive electrode active material were obtained.

### 2. Determination of initial specific capacity of button battery

The above prepared button battery was charged to 4.3V at 0.1C, then charged at a constant voltage of 4.3V until the current was less than or equal to 0.05 mA. It was allowed to stand for 5 minutes. Then the button battery was discharged at 0.1C to 2.0V. The discharge capacity measured at this moment was initial specific capacity, denoted as D0.

### 3. Determination of average discharge voltage (V) of button battery

Under a constant temperature environment of 25°C, the above prepared button battery was allowed to stand for 5 minutes, then was discharged to 2.5V at 0.1C, then was allowed to stand for 5 minutes, then charged to 4.3 V at 0.1C, then was charged at a constant voltage of 4.3V until the current was less than or equal to 0.05mA, then was allowed to stand for 5 minutes; and then was discharged to 2.5V at 0.1C. The discharge capacity measured at this moment was initial specific capacity, represented as D0, and the discharge energy at this moment was initial energy, denoted as E0. The average discharge voltage (V) of button battery was E0/D0.

### 4. Test of gas expansion at 60°C of full battery

The above prepared full battery was stored at 100% state of charge (SOC) at 60°C. Before and during storage, open circuit voltage (OCV) and AC internal impedance (IMP) of the battery were tested to monitor SOC and volume of the battery was measured. After every 48 hours of storage, the full battery was taken out and allowed to stand for 1 hour, and then open circuit voltage (OCV) and internal impedance (IMP) were tested. After it was cooled to room temperature, volume of the battery was measured using a drainage method. The drainage method included measuring gravity F₁ of the battery alone with a balance that can automatically perform unit conversion with a dial data, and then placing the battery completely in deionized water (with a density of 1g/cm³), measuring gravity F₂ of the battery at this moment wherein a buoyant force F_{b} of the battery was F₁-F₂, and then according to the Archimedes principle F_{b} = ρ× g × V, the volume of the battery was calculated: V=( F₁-F₂)/(ρ×g).

From the OCV and IMP test results, it can be seen that the batteries of the examples maintain a SOC of 99% or higher throughout the testing process until the end of storage.

After 30 days of storage, the volume of battery was measured, and the increased percentage in battery volume after storage compared to the previous battery volume was calculated.

### 5. Test of cycle performance at 45 °C of full battery

Under a constant temperature environment of 45°C, the above prepared full battery was charged at 1C to 4.3V, and then charged at a constant voltage at 4.3V until the current was less than or equal to 0.05 mA. The full battery was allowed to stand for 5 minutes, then discharged at 1C to 2.5V. The discharge capacity at this moment was reported as D0. The above charge-discharge cycle was repeated until the discharge capacity was reduced to 80% of D0. The number of cycles that the battery had undergone at this moment was reported.

### 6. Determination of lattice variability

Under a constant temperature environment of 25°C, the above prepared positive electrode active material sample was placed in XRD (Bruker D8 Discover model) and tested at 1°/minute. The test data was organized and analyzed. Referring to the standard PDF card, the lattice constants a0, b0, c0, and v0 (a0, b0, and c0 represent the length size in individual directions of lattice cell, respectively, v0 represents the volume of lattice cell, which can be directly obtained through XRD refinement results) were calculated.

Using the preparation method of button battery, the positive electrode active material sample was prepared into a button battery. The button battery was charged at a small rate of 0.05C until the current was decreased to 0.01C. Then the positive electrode plate was taken out the button battery and soaked in dimethyl carbonate (DMC) for 8 hours. After drying and scraping the powder, the particles with a particle size less than 500 nm were obtained by sieving. A sample was taken and its lattice volume v1 was calculated in the same way as the fresh sample was tested above. (v0-v1)/v0 ×100% representing the lattice variability (lattice volume variability) of before and after complete de-intercalation and intercalation of lithium was shown in the table.

### 7. Determination of Li/Mn anti-site defect concentration

The XRD results measured in the "Measurement method for lattice variability" were compared with the PDF (Powder Diffusion File) card of standard crystal to obtain the Li/Mn anti-site defect concentration. Specifically, the XRD results tested in the "Measurement method for lattice variability" were imported into the General Structural Analysis System (GSAS) software to automatically obtain refined results, which include the occupancy of different atoms. The Li/Mn anti-site defect concentration was obtained by reading the refined results.

### 8. Determination of leaching out of transition metal ions

At 45 °C, a full battery with capacity reduced to 80% was discharged to 2.0 V of cutoff voltage at a rate of 0.1 C. Then the battery was disassembled, the negative electrode plate was taken out. 30 discs having a unit area (1540.25mm²) were randomly taken on the negative electrode plate. Inductively coupled plasma emission spectrum (ICP) was tested by using Agilent ICP-OES730. The amounts of Fe (if Fe was doped at Mn site of the positive electrode active material) and Mn were calculated on the basis of the ICP results, and then the amount of leaching out of Mn (and Fe doped at Mn site) after cycle was calculated. The testing standard was based on EPA-6010D-2014.

### 9. Determination of surface oxygen valence

5g of the above prepared positive electrode active material sample was taken and prepared into a button battery according to the preparation method of button battery. The button battery was charged at a low rate of 0.05C until the current decreased to 0.01C. Then the positive electrode plate was taken out the button battery and soaked in dimethyl carbonate (DMC) for 8 hours. After drying and scraping the powder, the particles with a particle size less than 500 nm were obtained by sieving. The obtained particles were measured with Electron Energy Loss Spectroscopy (EELS, Talos F200S model) to obtain the energy loss near edge structure (ELNES), which can reflect the state density and energy level distribution of elements. Based on the density of states and energy level distribution, the number of occupied electrons was calculated by integrating the density of states in valence band, thereby calculating the surface oxygen valence after charging.

### 10. Determination of compaction density

5g of the above prepared positive electrode active material powders were taken and placed in a special mold for compaction (CARVER mold in the United States, model 13mm), and then the mold was placed on a compaction density instrument. 3T (tonnes) of pressure was applied and thickness of powders under the pressure was read on the equipment (i.e. the thickness after the pressure is removed, the area of the container used for testing being 1540.25mm²). The compaction density was calculated via ρ= m/v.

### 11. Determination of specific surface area:

5g of the above prepared positive electrode active material powder was taken and tested by using Tri-Star 3020 specific surface area pore size analysis tester from Micromeritics, USA. The specific surface area was calculated by BET (Brunauer Emmett Teller) method. The testing standard was based on GB/T 19587-2017.

### 12. X-ray diffraction method for testing the crystallinity of pyrophosphates and phosphates:

5g of the above prepared positive active material powder was taken for the measurement of a total scattering intensity by X-ray, which was the sum of scattering intensity of substances in the whole space, and was only related to intensity of primary rays, chemical structure, and the total number of electrons participating in diffraction, i.e., how much the mass is, and had nothing to do with ordinal state of samples. And then crystallized scattering and non-crystallized scattering from the diffractogram were separated, and the degree of crystallinity was a ratio of the intensity of crystallized scattering portion to the total intensity of scattering.

### 13. Crystal plane spacing and orientation angle:

1g of the above prepared positive electrode active material powder each was placed in a 50mL test tube, to which 10mL of alcohol with 75% by mass was injected, and then it was subjected to sufficient stirring and dispersion for 30 minutes. And then an appropriate amount of the above solution was dropped on ta 300-mesh copper mesh with a clean disposable plastic pipette. At this time, some of the powder would be left on the copper mesh, and then the copper mesh with samples would be transferred to a TEM (Talo F200s G2) sample chamber for testing, thereby obtaining original images of TEM testing.

The above TEM images were opened in DigitalMicrograph software and subjected to Fourier transform (automatically done by the software after clicking the operation) to get a diffraction pattern, the distance from the diffracted spot to the center of diffraction pattern was measured to get a crystal plane spacing, and the orientation angle was calculated according to the Bragg's equation.

Table 1 shows the composition of the positive electrode active material in Examples 1-1 to 1-33 and Comparative Examples 1-8.

Table 2 shows preparation of non-aqueous electrolytic solution of Examples 1-1 to 1-33, Examples 2-1 to 2-3, Examples 3-1 to 3-24 and Comparative Examples 1 to 8.

Table 3 shows the performance results measured by the above performance testing methods for the positive electrode active material, positive electrode plate, button battery or full battery of Examples 1-1 to 1-33 and Comparative Examples 1 to 8.

Table 4 shows the performance results measured by the above performance testing methods for the positive electrode active material, positive electrode plate, button battery or full battery of Examples 2-1 to 2-3.

**Table 1**

| No. | Core | First cladding layer | Second cladding layer |
|---|---|---|---|
| Example 1-1 | Li_{0.999}Mn_{0.60}Fe_{0.393}V_{0.004}Co_{0.003}P_{0.999}S_{0.001}O₄ | 1% Li₂FeP₂O₇/3% LiFePO₄ | 2% carbon |
| Example 1-2 | Li_{0.999}Mn_{0.60}Fe_{0.40}P_{0.999}S_{0.001}O₄ | 0.8% Li₂FeP₂O₇/2.4% LiFePO₄ | 1% carbon |
| Example 1-3 | Li_{0.999}Mn_{0.60}Fe_{0.40}P_{0.999}S_{0.001}O₄ | 1% Li₂FeP₂O₇/3% LiFePO₄ | 1% carbon |
| Example 1-4 | Li_{0.999}Mn_{0.60}Fe_{0.40}P_{0.999}S_{0.001}O₄ | 1.2% Li₂FeP₂O₇/3.6% LiFePO₄ | 1% carbon |
| Example 1-5 | Li_{0.999}Mn_{0.60}Fe_{0.40}P_{0.999}S_{0.001}O₄ | 1.4% Li₂FeP₂O₇/4.2% LiFePO₄ | 1% carbon |
| Example 1-6 | Li_{0.999}Mn_{0.60}Fe_{0.40}P_{0.999}S_{0.001}O₄ | 1.6% Li₂FeP₂O₇/4.8% LiFePO₄ | 1% carbon |
| Example 1-7 | Li_{0.999}Mn_{0.60}Fe_{0.40}P_{0.999}S_{0.001}O₄ | 1% Li₂FeP₂O₇/3% LiFePO₄ | 2% carbon |
| Example 1-8 | Li_{0.999}Mn_{0.60}Fe_{0.40}P_{0.999}S_{0.001}O₄ | 1% Li₂FeP₂O₇/3% LiFePO₄ | 4% carbon |
| Example 1-9 | Li_{0.999}Mn_{0.60}Fe_{0.40}P_{0.999}S_{0.001}O₄ | 1% Li₂FeP₂O₇/3% LiFePO₄ | 5% carbon |
| Example 1-10 | Li_{0.999}Mn_{0.60}Fe_{0.40}P_{0.999}S_{0.001}O₄ | 1% Li₂FeP₂O₇/3% LiFePO₄ | 6% carbon |
| Example 1-11 | Li_{0.999}Mn_{0.60}Fe_{0.40}P_{0.999}S_{0.001}O₄ | 1.5% Li₂FeP₂O₇/2.5% LiFePO₄ | 2% carbon |
| Example 1-12 | Li_{0.999}Mn_{0.60}Fe_{0.40}P_{0.999}S_{0.001}O₄ | 2% Li₂FeP₂O₇/2% LiFePO₄ | 2% carbon |
| Example 1-13 | Li_{0.999}Mn_{0.60}Fe_{0.40}P_{0.999}S_{0.001}O₄ | 2.5% Li₂FeP₂O₇/1.5% LiFePO₄ | 2% carbon |
| Example 1-14 | Li_{0.999}Mn_{0.60}Fe_{0.40}P_{0.999}S_{0.001}O₄ | 3% Li₂FeP₂O₇/1% LiFePO₄ | 2% carbon |
| Example 1-15 | Li_{0.999}Mn_{0.60}Zn_{0.40}P_{0.999}S_{0.001}O₄ | 3% Li₂FeP₂O₇/1% LiFePO₄ | 2% carbon |
| Example 1-16 | Li_{0.993}Mn_{0.6}Ni_{0.393}Zn_{0.004}Ti_{0.003}P_{0.999}S_{0.001}O₄ | 1% Li₂FeP₂O₇/3% LiFePO₄ | 2% carbon |
| Example 1-17 | Li_{0.999}Mn_{0.60}Fe_{0.393}V_{0.007}P_{0.999}S_{0.001}O₄ | 1% Li₂FeP₂O₇/3% LiFePO₄ | 2% carbon |
| Example 1-18 | Li_{0.999}Mn_{0.0.393}V_{0.004}Mg_{0.003}P_{0.999}S_{0.001}O₄ | 1% Li₂FeP₂O₇/3% LiFePO₄ | 2% carbon |
| Example 1-19 | LiMn_{0.60}Fe_{0.393}V_{0.004}Mg_{0.003}P_{0.999}N_{0.001}O₄ | 1% Li₂FeP₂O₇/3% LiFePO₄ | 2% carbon |
| Example 1-20 | Li_{1.001}Mn_{0.60}Fe_{0.393}V_{0.004}Mg_{0.003}P_{0.999}Si_{0.001}O₄ | 1% Li₂FeP₂O₇/3% LiFePO₄ | 2% carbon |
| Example 1-21 | Li_{1.001}Mn_{0.55}Fe_{0.40}V_{0.025}Mg_{0.025}P_{0.999}Si_{0.001}O₄ | 1% Li₂FeP₂O₇/3% LiFePO₄ | 2% carbon |
| Example 1-22 | Li_{1.001}Mn_{0.65}Fe_{0.25}V_{0.05}Mg_{0.05}P_{0.999}Si_{0.001}O₄ | 1% Li₂FeP₂O₇/3% LiFePO₄ | 2% carbon |
| Example 1-23 | Li_{1.004}Mn_{0.7}Fe_{0.2}V_{0.05}Mg_{0.05}P_{0.998}B_{0.002}O₄ | 1% Li₂FeP₂O₇/3% LiFePO₄ | 2% carbon |
| Example 1-24 | Li_{1.0016}Mn_{0.75}Fe_{0.15}V_{0.05}Mg_{0.05}P_{0.997}B_{0.003}O₄ | 1% Li₂FeP₂O₇/3% LiFePO₄ | 2% carbon |
| Example 1-25 | Li_{1.002}Mn_{0.60}Fe_{0.393}V_{0.004}Mg_{0.003}P_{0.998}Si_{0.002}O₄ | 1% Li₂FeP₂O₇/3% LiFePO₄ | 2% carbon |
| Example 1-26 | Li_{0.997}Mn_{0.80}Fe_{0.194}V_{0.003}Mg_{0.003}P_{0.997}S_{0.003}O₄ | 1% Li₂FeP₂O₇/3% LiFePO₄ | 2% carbon |
| Example 1-27 | Li_{0.996}Mn_{0.60}Fe_{0.393}V_{0.004}Mg_{0.003}P_{0.996}S_{0.004}O₄ | 1% Li₂FeP₂O₇/3% LiFePO₄ | 2% carbon |
| Example 1-28 | Li_{0.995}Mn_{0.9}Fe_{0.094}V_{0.003}Mg_{0.003}P_{0.995}S_{0.005}O₄ | 1% Li₂FeP₂O₇/3% LiFePO₄ | 2% carbon |
| Example 1-29 | Li_{0.994}Mn_{0.90}Fe_{0.094}V_{0.003}Mg_{0.003}P_{0.994}S_{0.006}O₄ | 1% Li₂FeP₂O₇/3% LiFePO₄ | 2% carbon |
| Example 1-30 | Li_{0.993}Mn_{0.90}Fe_{0.094}V_{0.003}Mg_{0.003}P_{0.993}S_{0.007}O₄ | 1% Li₂FeP₂O₇/3% LiFePO₄ | 2% carbon |
| Example 1-31 | Li_{0.992}Mn_{0.90}Fe_{0.094}V_{0.003}Mg_{0.003}P_{0.992}S_{0.008}O₄ | 1% Li₂FeP₂O₇/3% LiFePO₄ | 2% carbon |
| Example 1-32 | Li_{0.991}Mn_{0.90}Fe_{0.094}V_{0.003}Mg_{0.003}P_{0.991}S_{0.009}O₄ | 1% Li₂FeP₂O₇/3% LiFePO₄ | 2% carbon |
| Example 1-33 | Li_{0.9}Mn_{0.90}Fe_{0.094}V_{0.003}Mg_{0.003}P_{0.9}S_{0.1}O₄ | 1% Li₂FeP₂O₇/3% LiFePO₄ | 2% carbon |
| Comparative Example 1 | LiMnPO₄ | - | 1% carbon |
| Comparative Example 2 | LiMn_{0.60}Fe_{0.40}PO₄ | - | 1% carbon |
| Comparative Example 3 | Li_{0.999}MnP_{0.999}S_{0.001}O₄ | - | 1% carbon |
| Comparative Example 4 | Li_{0.999}Mn_{0.60}Fe_{0.40}P_{0.999}S_{0.001}O₄ | - | 1% carbon |
| Comparative Example 5 | Li_{0.999}Mn_{0.60}Fe_{0.40}P_{0.999}S_{0.001}O₄ | 4% amphorous Li₂FeP₂O₇ | 1% carbon |
| Comparative Example 6 | Li_{0.999}Mn_{0.60}Fe_{0.40}P_{0.999}S_{0.001}O₄ | 4% amphorous LiFePO₄ | 1% carbon |
| Comparative Example 7 | Li_{0.999}Mn_{0.60}Fe_{0.40}P_{0.999}S_{0.001}O₄ | 1% amphorous Li₂FeP₂O₇+3% amphorous LiFePO₄ | 1% carbon |
| Comparative Example 8 | Li_{0.999}Mn_{0.60}Fe_{0.40}P_{0.999}S_{0.001}O₄ | 1% Li₂FeP₂O₇/3% LiFePO₄ | 1% carbon |
| Note: 1) In Examples 1-1 to 1-33 and Comparative Example 8, Li₂FeP₂O₇ and LiFePO₄ both have a crystallinity of 100%; 2) In Comparative Example 5-7, Li₂FeP₂O₇ has a crystalline of 5% and LiFePO₄ has a crystalline of 8%_{∘} | | | |

**Table 2**

| No. | Preparation of non-aqueous electrolytic solution |
|---|---|
| Comparative Examples 1 to 8 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ was dissolved, and the resulting mixture was stirred homogeneously, to obtain a non-aqueous electrolytic solution. |
| Examples 1-1 to 1-33 and Examples 2-1 to 2-3 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 2 wt% (based on the total weight of the non-aqueous electrolytic solution) of compound H12 were dissolved, and the resulting mixture was stirred homogeneously, to obtain a non-aqueous electrolytic solution. |
| Example 3-1 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 2 wt% (based on the total weight of the non-aqueous electrolytic solution) of compound H1 were dissolved, and the resulting mixture was stirred homogeneously, to obtain a non-aqueous electrolytic solution. |
| Example 3-2 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 2 wt% (based on the total weight of the non-aqueous electrolytic solution) of compound H2 were dissolved, and the resulting mixture was stirred homogeneously, to obtain a non-aqueous electrolytic solution. |
| Example 3-3 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 2 wt% (based on the total weight of the non-aqueous electrolytic solution) of compound H13 were dissolved, and the resulting mixture was stirred homogeneously, to obtain a non-aqueous electrolytic solution. |
| Example 3-4 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 2 wt% (based on the total weight of the non-aqueous electrolytic solution) of compound H14 were dissolved, and the resulting mixture was stirred homogeneously, to obtain a non-aqueous electrolytic solution. |
| Example 3-5 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 2 wt% (based on the total weight of the non-aqueous electrolytic solution) of compound H21 were dissolved, and the resulting mixture was stirred homogeneously, to obtain a non-aqueous electrolytic solution. |
| Example 3-6 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 2 wt% (based on the total weight of the non-aqueous electrolytic solution) of compound H29 were dissolved, and the resulting mixture was stirred homogeneously, to obtain a non-aqueous electrolytic solution. |
| Example 3-7 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 2 wt% (based on the total weight of the non-aqueous electrolytic solution) of compound H33 were dissolved, and the resulting mixture was stirred homogeneously, to obtain a non-aqueous electrolytic solution. |
| Example 3-8 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 2 wt% (based on the total weight of the non-aqueous electrolytic solution) of compound H35 were dissolved, and the resulting mixture was stirred homogeneously, to obtain a non-aqueous electrolytic solution. |
| Example 3-9 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 2 wt% (based on the total weight of the non-aqueous electrolytic solution) of compound H36 were dissolved, and the resulting mixture was stirred homogeneously, to obtain a non-aqueous electrolytic solution. |
| Example 3-10 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 2 wt% (based on the total weight of the non-aqueous electrolytic solution) of compound H37 were dissolved, and the resulting mixture was stirred homogeneously, to obtain a non-aqueous electrolytic solution. |
| Example 3-11 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 2 wt% (based on the total weight of the non-aqueous electrolytic solution) of compound H38 were dissolved, and the resulting mixture was stirred homogeneously, to obtain a non-aqueous electrolytic solution. |
| Example 3-12 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 0.01 wt% (based on the total weight of the non-aqueous electrolytic solution) of compound H12 were dissolved, and the resulting mixture was stirred homogeneously, to obtain a non-aqueous electrolytic solution. |
| Example 3-13 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 0.1 wt% (based on the total weight of the non-aqueous electrolytic solution) of compound H12 were dissolved, and the resulting mixture was stirred homogeneously, to obtain a non-aqueous electrolytic solution. |
| Example 3-14 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 0.5 wt% (based on the total weight of the non-aqueous electrolytic solution) of compound H12 were dissolved, and the resulting mixture was stirred homogeneously, to obtain a non-aqueous electrolytic solution. |
| Example 3-15 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 1 wt% (based on the total weight of the non-aqueous electrolytic solution) of compound H12 were dissolved, and the resulting mixture was stirred homogeneously, to obtain a non-aqueous electrolytic solution. |
| Example 3-16 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 5 wt% (based on the total weight of the non-aqueous electrolytic solution) of compound H12 were dissolved, and the resulting mixture was stirred homogeneously, to obtain a non-aqueous electrolytic solution. |
| Example 3-17 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 10 wt% (based on the total weight of the non-aqueous electrolytic solution) of compound H12 were dissolved, and the resulting mixture was stirred homogeneously, to obtain a non-aqueous electrolytic solution. |
| Example 3-18 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 15 wt% (based on the total weight of the non-aqueous electrolytic solution) of compound H12 were dissolved, and the resulting mixture was stirred homogeneously, to obtain a non-aqueous electrolytic solution. |
| Example 3-19 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆ and 20 wt% (based on the total weight of the non-aqueous electrolytic solution) of compound H12 were dissolved, and the resulting mixture was stirred homogeneously, to obtain a non-aqueous electrolytic solution. |
| Example 3-20 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆, 2 wt% (based on the total weight of the non-aqueous electrolytic solution) of compound H12 and 0.5 wt% (based on the total weight of the non-aqueous electrolytic solution) of VC were dissolved, and the resulting mixture was stirred homogeneously, to obtain a non-aqueous electrolytic solution. |
| Example 3-21 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆, 2 wt% (based on the total weight of the non-aqueous electrolytic solution) of compound H12 and 0.5 wt% (based on the total weight of the non-aqueous electrolytic solution) of VEC were dissolved, and the resulting mixture was stirred homogeneously, to obtain a non-aqueous electrolytic solution. |
| Example 3-22 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆, 2 wt% (based on the total weight of the non-aqueous electrolytic solution) of compound H12 and 0.5 wt% (based on the total weight of the non-aqueous electrolytic solution) of FEC were dissolved, and the resulting mixture was stirred homogeneously, to obtain a non-aqueous electrolytic solution. |
| Example 3-23 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆, 2 wt% (based on the total weight of the non-aqueous electrolytic solution) of compound H12 and 0.5 wt% (based on the total weight of the non-aqueous electrolytic solution) of ethanedinitrile were dissolved, and the resulting mixture was stirred homogeneously, to obtain a non-aqueous electrolytic solution. |
| Example 3-24 | In an argon atmosphere glove box (H₂O<0.1 ppm, O₂<0.1 ppm), as an organic solvent, ethylene carbonate (EC), diethyl carbonate (DEC) and dimethyl carbonate (DMC) were mixed homogeneously at a volume ratio of 1:1:1, in which 12.5 wt% (based on the total weight of the non-aqueous electrolytic solution) of LiPF₆, 2 wt% (based on the total weight of the non-aqueous electrolytic solution) of compound H12 and 0.5 wt% (based on the total weight of the non-aqueous electrolytic solution) of ethoxypentafhiorocyclotriphosphonitrile were dissolved, and the resulting mixture was stirred homogeneously, to obtain a non-aqueous electrolytic solution. |

**Table 3**

| No. | Lattice variability (%) | Li/Mn anti-site defect concentration (%) | surface oxygen valence | Compaction denisty (g/cm³) | Specific surface area of positive electrode active material (m²/g) | leaching out of Fe and Mn (ppm) after cycle | 0.1C specific capacity of button battery (mAh/g) | Average discharge voltage of button battery (V) | Battery expansion after storage at 60°C for 30 d (%) | Cycle numbers corresponding to 80% capacity retention at 45°C |
|---|---|---|---|---|---|---|---|---|---|---|
| Example 1-1 | 2.4 | 0.4 | -1.98 | 2.41 | 15 | 7 | 159.3 | 3.82 | 1.8 | 1461 |
| Example 1-2 | 6.6 | 1.2 | -1.97 | 2.43 | 15 | 57 | 149.9 | 3.79 | 6.1 | 884 |
| Example 1-3 | 6.5 | 1.1 | -1.97 | 2.45 | 15 | 43 | 149.5 | 3.78 | 5.0 | 1005 |
| Example 1-4 | 6.5 | 0.8 | -1.97 | 2.44 | 15 | 29 | 148.3 | 3.77 | 4.6 | 1065 |
| Example 1-5 | 6.5 | 0.7 | -1.98 | 2.45 | 15 | 18 | 147.8 | 3.77 | 3.4 | 1170 |
| Example 1-6 | 6.6 | 0.6 | -1.98 | 2.45 | 15 | 14 | 146.9 | 3.76 | 2.7 | 1308 |
| Example 1-7 | 6.5 | 1.0 | -1.97 | 2.46 | 15 | 38 | 148.5 | 3.77 | 4.6 | 1065 |
| Example 1-8 | 6.5 | 1.0 | -1.97 | 2.47 | 15 | 34 | 147.4 | 3.77 | 4.1 | 1113 |
| Example 1-9 | 6.4 | 1.1 | -1.98 | 2.44 | 15 | 26 | 145.3 | 3.77 | 3.5 | 1219 |
| Example 1-10 | 6.4 | 1.1 | -1.98 | 2.41 | 15 | 16 | 143.1 | 3.77 | 2.7 | 1341 |
| Example 1-11 | 6.5 | 1.1 | -1.97 | 2.44 | 15 | 31 | 148.8 | 3.78 | 4.9 | 1020 |
| Example 1-12 | 6.6 | 1.0 | -1.96 | 2.47 | 15 | 20 | 148.6 | 3.78 | 5.8 | 987 |
| Example 1-13 | 6.7 | 1.2 | -1.96 | 2.46 | 15 | 16 | 148.2 | 3.78 | 6.6 | 898 |
| Example 1-14 | 6.7 | 1.1 | -1.97 | 2.45 | 15 | 8 | 148.0 | 3.79 | 7.1 | 840 |
| Example 1-15 | 7.5 | 2.5 | -1.97 | 2.45 | 15 | 16 | 139.7 | 3.90 | 8.0 | 943 |
| Example 1-16 | 5.4 | 0.8 | -1.97 | 2.44 | 15 | 13 | 140.4 | 3.90 | 4.3 | 1071 |
| Example 1-17 | 4.2 | 0.6 | -1.97 | 2.45 | 15 | 12 | 154.3 | 3.82 | 3.0 | 1365 |
| Example 1-18 | 2.6 | 0.5 | -1.97 | 2.45 | 15 | 9 | 156.7 | 3.84 | 2.6 | 1370 |
| Example 1-19 | 2.3 | 0.5 | -1.98 | 2.45 | 15 | 8 | 158.7 | 3.84 | 2.0 | 1484 |
| Example 1-20 | 2.4 | 0.7 | -1.98 | 2.44 | 15 | 10 | 158.5 | 3.84 | 2.3 | 1505 |
| Example 1-21 | 2.2 | 0.5 | -1.98 | 2.43 | 15 | 7 | 159.5 | 3.76 | 1.9 | 1605 |
| Example 1-22 | 2.5 | 0.8 | -1.98 | 2.42 | 15 | 11 | 158.0 | 3.87 | 2.7 | 1411 |
| Example 1-23 | 2.6 | 0.8 | -1.98 | 2.43 | 15 | 10 | 158.2 | 3.87 | 2.4 | 1395 |
| Example 1-24 | 2.6 | 0.8 | -1.98 | 2.44 | 15 | 9 | 158.5 | 3.87 | 2.5 | 1462 |
| Example 1-25 | 2.3 | 0.7 | -1.98 | 2.45 | 15 | 9 | 158.4 | 3.82 | 2.3 | 1506 |
| Example 1-26 | 2.8 | 0.9 | -1.98 | 2.45 | 15 | 11 | 157.2 | 3.89 | 2.8 | 1241 |
| Example 1-27 | 2.2 | 0.6 | -1.98 | 2.46 | 15 | 10 | 158.6 | 3.82 | 2.3 | 1533 |
| Example 1-28 | 3.2 | 1.1 | -1.96 | 2.45 | 15 | 12 | 157.9 | 3.93 | 3.0 | 1198 |
| Example 1-29 | 3.0 | 1.2 | -1.95 | 2.44 | 15 | 13 | 157.2 | 3.93 | 3.0 | 1142 |
| Example 1-30 | 2.8 | 1.4 | -1.95 | 2.45 | 15 | 14 | 156.9 | 3.93 | 2.9 | 1043 |
| Example 1-31 | 2.6 | 1.4 | -1.94 | 2.44 | 15 | 15 | 156.5 | 3.93 | 2.9 | 1009 |
| Example 1-32 | 2.4 | 1.2 | -1.94 | 2.45 | 15 | 16 | 155.9 | 3.93 | 2.7 | 987 |
| Example 1-33 | 2.1 | 0.9 | -1.94 | 2.44 | 15 | 18 | 155.6 | 3.93 | 2.6 | 967 |
| Comparative Example 1 | 11.4 | 3.2 | -1.55 | 1.81 | 15 | 2060 | 125.6 | 4.02 | 48.6 | 185 |
| Comparative Example 2 | 8.7 | 2.8 | -1.76 | 1.92 | 15 | 1597 | 134.8 | 3.76 | 42.5 | 358 |
| Comparative Example 3 | 9.8 | 2.5 | -1.66 | 1.88 | 15 | 1895 | 128.6 | 4.05 | 45.5 | 267 |
| Comparative Example 4 | 6.7 | 1.8 | -1.83 | 1.82 | 15 | 1279 | 140.5 | 3.78 | 38.5 | 417 |
| Comparative Example 5 | 6.5 | 1.8 | -1.90 | 1.79 | 15 | 208 | 140.3 | 3.73 | 12.5 | 519 |
| Comparative Example 6 | 6.6 | 1.8 | -1.91 | 1.83 | 15 | 318 | 140.2 | 3.74 | 11.5 | 528 |
| Comparative Example 7 | 6.6 | 1.8 | -1.90 | 1.84 | 15 | 174 | 140.1 | 3.75 | 8.6 | 682 |
| Comparative Example 8 | 6.5 | 1.1 | -1.97 | 2.45 | 15 | 48 | 148.5 | 3.74 | 5.3 | 918 |

**Table 4**

| No. | Crystallinity of pyrophosphate and phosphate | Lattice variability (%) | Li/Mn anti-site defect concentration (%) | surface oxygen valence | Compaction denisty (g/cm³) | Specific surface area of positive electrode active material (m²/g) | leaching out of Fe and Mn (ppm) after cycle | 0.1C specific capacity of button battery (mAh/g) | Average discharge voltage of button battery (V) | Battery expansion after storage at 60°C for 30 d (%) | Cycle numbers corresponding to 80% capacity retention at 45°C |
|---|---|---|---|---|---|---|---|---|---|---|---|
| Example 2-1 | 30% | 6.3 | 1.9 | -1.88 | 2.10 | 15 | 132 | 146.2 | 3.75 | 5.3 | 768 |
| Example 2-2 | 50% | 4.7 | 1.2 | -1.89 | 2.25 | 15 | 87 | 150.2 | 3.77 | 4.5 | 956 |
| Example 2-3 | 70% | 3.5 | 0.8 | -1.91 | 2.33 | 15 | 26 | 152.4 | 3.78 | 3.6 | 1130 |
| Example 1-1 | 100% | 2.4 | 0.4 | -1.98 | 2.41 | 15 | 7 | 159.3 | 3.82 | 1.8 | 1461 |

As can be seen from the combination of Examples 1-1 to 1-33 and Comparative Examples 1 to 8, the presence of the first cladding layer is favorable to reducing the Li/Mn antisite defect concentration and the leaching out of Fe and Mn after cycle of the resulting material, increasing the specific capacity of batteries, and improving the cycle performance and the storage performance of batteries. When other elements are doped at the Mn site and the phosphorus site, respectively, the lattice variability, the anti-site defect concentration, and the leaching out of Fe and Mn in the resulting material can be significantly reduced, the specific capacity of batteries can be increased, and the cycle performance and storage performance of batteries can be improved. The presence of the first additive in the non-aqueous electrolytic solution is conducive to further reducing leaching out of Mn ions and gas production, thereby further improving the cycle performance and storage performance of batteries.

As can be seen from the combination of Examples 1-2 to 1-6, as the amount of the first cladding layer is increased from 3.2% to 6.4%, the Li/Mn anti-site defect concentration of the resulting material can be gradually decreased, and the leaching out of Fe and Mn after cycle can be gradually decreased, corresponding to the improvement of the safety performance and the cycle performance of batteries at 45° C, with a slight decrease in the specific capacity. Optionally, when the total amount of the first cladding layer is from 4 wt% to 5.6 wt%, the comprehensive performance of the corresponding battery is optimal.

As can be seen from the combination of Examples 1-3 and Examples 1-7 to 1-10, as the amount of the second cladding layer is increased from 1% to 6%, the leaching out of Fe and Mn in the resulting material after cycle is gradually decreased, corresponding to the improvement of the safety performance and the cycle performance of batteries at 45° C, with a slight decrease in the specific capacity. Optionally, when the total amount of the second cladding layer is from 3 wt% to 5 wt%, the comprehensive performance of the corresponding battery is optimal.

As can be seen from the combination of Examples 1-11 to 1-15 and the Comparative Examples 5 to 6, the improvement of battery performances is more pronounced when both Li₂FeP₂O₇ and LiFePO₄ are present in the first cladding layer, and in particular when a weight ratio of Li₂FeP₂O₇ and LiFePO₄ is from 1:3 to 3:1 and especially when a weight ratio of Li₂FeP₂O₇ and LiFePO₄ is from 1:3 to 1:1.

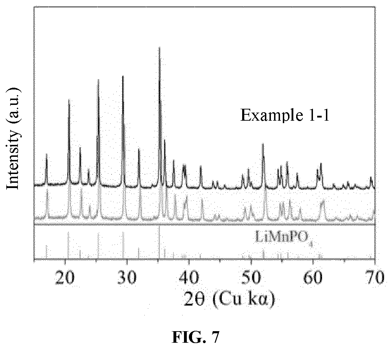

FIG. 7 is a comparison of an XRD spectrum of the core of the positive active materials prepared in Example 1-1 with the XRD standard spectrum (00-033-0804) of lithium manganese phosphate. As shown in FIG. 7, the core of the positive electrode active material of the present application has basically same primary characteristic peaks at position to undoped LiMnPO₄, indicating that the core of the positive electrode active material of the present application has no impurity phase and the improvement of battery performances is mainly caused by doping of elements rather than by an impurity phase.

As can be seen from Table 3, with the gradual increase in crystallinity of pyrophosphate salts and phosphate salts in the first cladding layer, the lattice variability, Li/Mn an-tisite defect concentration, and leaching out of Fe and Mn of the corresponding materials are gradually decreased, and the specific capacity of batteries is gradually increased, and the safety performance and cycle performance are also gradually improved.

Examples 3-1 to 3-24 were the same as Example 1-1 with the exception for the preparation of non-aqueous electrolytic solution. Table 5 shows the performance results measured by the above performance testing methods for the button battery or full battery of Examples 3-1 to 3-11. Table 6 shows the performance results measured by the above performance testing methods for the button battery or full battery of Examples 3-12 to 3-19. Table 7 shows the performance results measured by the above performance testing methods for the button battery or full battery of Examples 3-20 to 3-24.

**Table 5**

| No. | First additive | | leaching out of Fe and Mn (ppm) after cycle | 0.1C specific capacity of button battery (mAh/g) | Average discharge voltage of button battery (V) | Battery expansion after storage at 60°C for 30 d (%) | Cycle numbers corresponding to 80% capacity retention at 45°C |
|---|---|---|---|---|---|---|---|
| | Type | W1 (wt%) | | | | | |
| Example 3-1 | H1 | 2 | 7 | 159.1 | 3.81 | 1.8 | 1430 |
| Example 3-2 | H2 | 2 | 8 | 158.5 | 3.80 | 1.7 | 1386 |
| Example 3-3 | H13 | 2 | 8 | 158.9 | 3.80 | 1.9 | 1422 |
| Example 3-4 | H14 | 2 | 7 | 159.1 | 3.81 | 1.8 | 1433 |
| Example 3-5 | H21 | 2 | 7 | 158.7 | 3.80 | 1.8 | 1394 |
| Example 3-6 | H29 | 2 | 7 | 158.9 | 3.80 | 1.7 | 1425 |
| Example 3-7 | H33 | 2 | 6 | 159.2 | 3.82 | 1.5 | 1452 |
| Example 3-8 | H35 | 2 | 7 | 159.2 | 3.81 | 1.6 | 1440 |
| Example 3-9 | H36 | 2 | 7 | 159.0 | 3.80 | 1.6 | 1420 |
| Example 3-10 | H37 | 2 | 8 | 158.9 | 3.79 | 1.6 | 1407 |
| Example 3-11 | H38 | 2 | 7 | 159.0 | 3.80 | 1.6 | 1414 |

**Table 6**

| No. | First additive | | W1/ (C1+C2) | leaching out of Fe and Mn (ppm) after cycle | 0.1C specific capacity of button battery (mAh/g) | Average discharge voltage of button battery (V) | Battery expansion after storage at 60°C for 30 d (%) | Cycle numbers corresponding to 80% capacity retention at 45°C |
|---|---|---|---|---|---|---|---|---|
| | type | W1 (wt%) | | | | | | |
| Example 3-12 | H12 | 0.01 | 0.002 | 8 | 158.2 | 3.78 | 1.9 | 1329 |
| Example 3-13 | H12 | 0.1 | 0.017 | 8 | 158.5 | 3.78 | 1.9 | 1385 |
| Example 3-14 | H12 | 0.5 | 0.083 | 7 | 159.0 | 3.79 | 1.8 | 1418 |
| Example 3-15 | H12 | 1 | 0.167 | 7 | 159.2 | 3.80 | 1.8 | 1440 |
| Example 3-16 | H12 | 5 | 0.833 | 6 | 158.8 | 3.79 | 1.7 | 1402 |
| Example 3-17 | H12 | 10 | 1.667 | 5 | 157.2 | 3.78 | 1.6 | 1340 |
| Example 3-18 | H12 | 15 | 2.500 | 4 | 156.2 | 3.76 | 1.5 | 1324 |
| Example 3-19 | H12 | 20 | 3.333 | 3 | 155.9 | 3.75 | 1.4 | 1318 |

**Table 7**

| No. | First Additive | | Second Additive | | leaching out of Fe and Mn (ppm) after cycle | 0.1C specific capacity of button battery (mAh/g) | Average discharge voltage of button battery (V) | Battery expansion after storage at 60°C for 30 d (%) | Cycle numbers corresponding to 80% capacity retention at 45°C |
|---|---|---|---|---|---|---|---|---|---|
| | Type | W1 (wt%) | type | W2 (wt%) | | | | | |
| Example 3-20 | H12 | 2 | VC | 0.5 | 3 | 163.3 | 3.92 | 0.8 | 1698 |
| Example 3-21 | H12 | 2 | VEC | 0.5 | 5 | 161.2 | 3.87 | 1.2 | 1587 |
| Example 3-22 | H12 | 2 | FEC | 0.5 | 4 | 160.1 | 3.90 | 1.0 | 1634 |
| Example 3-23 | H12 | 2 | Ethane dinitrile | 0.5 | 7 | 159.6 | 3.85 | 1.6 | 1527 |
| Example 3-24 | H12 | 2 | Ethoxy pentafluoro cyclotriphosphonitrile | 0.5 | 7 | 159.4 | 3.83 | 1.8 | 1490 |

As can be seen from the combination of Examples 1-1 and Examples 3-1 to 3-11, the improvement effect on battery performances varies slightly depending on the type of the first additive.

As can be seen from the combination of Example 1-1 and Examples 3-12 to 3-19, as the content of the first additive is increased from 0.01% to 20%, the leaching out of Fe and Mn from the resulting material after cycle gradually decreases, and the safety performance of the corresponding batteries also improves, but the specific capacity and the cycle performance at 45°C will decrease to a certain extent when the content of the first additive is higher.

As can also be seen from the combination of Examples 1-1 and Examples 3-12 to 3-19, when the cladding amount of C1% by weight of the first cladding layer, the cladding amount of C2% by weight of the second cladding layer, and the content of W1% by weight of the first additive satisfy the relationship of W1/(C1+C2) that is from 0.001 to 2, optionally from 0.01 to 1, and more optionally from 0.05 to 1, it is allowed to further improve the specific capacity, cycle performance, and storage performance of batteries.

As can be seen from the combination of Examples 1-1 and Examples 3-20 to 3-24, when the non-aqueous electrolytic solution further comprises an appropriate amount of the second additive, it is allowed to further enhance the specific capacity, cycle performance, and storage performance of batteries.

It should be noted that this application is not limited to the above embodiments. The above embodiments are only provided as examples, and within the technical solution of the present application, embodiments having substantially the same configuration as the technical idea and exerting the same effects are all included within the technical scope of the present application. In addition, various modifications to the embodiments that can be conceived by those skilled in the art without departing from the scope of the spirit of the present application and other embodiments constructed by combining some constituent elements in the embodiments are also included in the scope of the present application.

## Claims

1. A secondary battery, comprising a positive electrode plate and an non-aqueous electrolytic solution, wherein
the positive electrode plate comprises a positive electrode active material with a core-shell structure, said positive electrode active material comprising an core and a shell covering said core,
said core comprises Li₁₊ₓMn_{1-y}A_{y}P_{1-z}R_{z}O₄, x is in the range of -0.100 to 0.100, y is in the range of 0.001 to 0.500, z is in the range of 0.001 to 0.100, said A comprises one or more elements selected from Zn, Al, Na, K, Mg, Mo, W, Ti, V, Zr, Fe, Ni, Co, Ga, Sn, Sb, Nb, and Ge, optionally one or more elements selected from Fe, Ti, V, Ni, Co and Mg, said R comprises one or more elements selected from B, Si, N and S;
said shell comprises a first cladding layer covering said core and a second cladding layer covering said first cladding layer,
said first cladding layer comprises pyrophosphate MP₂O₇ and phosphate XPO₄, said M and X each independently comprises one or more elements selected from Li, Fe, Ni, Mg, Co, Cu, Zn, Ti, Ag, Zr, Nb, and Al, and
said second cladding layer comprises carbon;
said non-aqueous electrolytic solution comprises a first additive that comprises one or more of compounds as shown by Formula 1, Formula 2 and Formula 3, 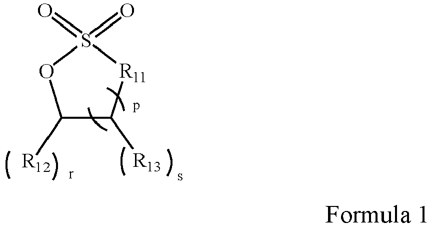 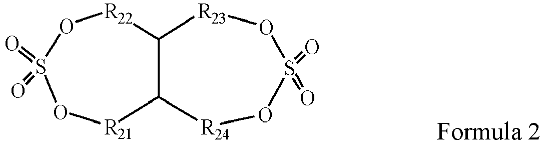 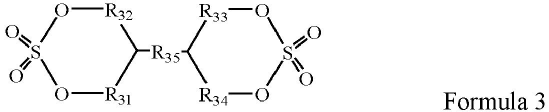 in which,
p represents 1, 2 or 3, r represents 1 or 2, s represents 1 or 2, and
R₁₁ represents an oxygen atom or C(Y¹)₂, Y¹ independently represents one of a hydrogen atom, a halogen atom, C1-C6 alkyl, C1-C6 haloalkyl, C1-C6 alkoxy, and C1-C6 haloalkoxy, and
R₁₂ each independently represents one of a hydrogen atom, a halogen atom, C1-C6 alkyl, C1-C6 haloalkyl, C1-C6 alkoxy, and C1-C6 haloalkoxy, and
R₁₃ each independently represents one of a hydrogen atom, a halogen atom, C1-C6 alkyl group, C1-C6 haloalkyl group, C1-C6 alkoxy group, and C1-C6 haloalkoxy group, and
R₂₁, R₂₂, R₂₃, R₂₄ each independently represent a single bond or C(Y²)₂, and Y² each independently represents one of a hydrogen atom, a halogen atom, C1-C6 alkyl, C1-C6 haloalkyl, C1-C6 alkoxy, and C1-C6 haloalkoxy, and
R₃₁, R₃₂, R₃₃, R₃₄ each independently represent a single bond or C(Y³)₂, and Y³ each independently represents one of a hydrogen atom, a halogen atom, C1-C6 alkyl, C1-C6 haloalkyl, C1-C6 alkoxy, and C1-C6 haloalkoxy, and
R₃₅ is absent or represents one of a single bond, an oxygen atom, C1-C6 alkylene, C1-C6 haloalkylene, C1-C6 oxa-alkylene.

2. The secondary battery as claimed in claim 1, wherein
said compound shown in Formula 1 satisfies at least one of the following conditions (1) to (4):
(1) p represents 1 or 2,
(2) R₁₁ represents an oxygen atom or C(Y¹)₂, with Y¹ independently representing one of a hydrogen atom, a fluorine atom, methyl, ethyl, propyl, fluorinated methyl, fluorinated ethyl, fluorinated propyl, methoxy, ethoxy, and propoxy,
(3) R₁₂ each independently represents one of a hydrogen atom, a fluorine atom, methyl, ethyl, propyl, fluorinated methyl, fluorinated ethyl, fluorinated propyl, methoxy, ethoxy, and propoxy, and
(4) R₁₃ each independently represents one of a hydrogen atom, a fluorine atom, methyl, ethyl, propyl, fluorinated methyl, fluorinated ethyl, fluorinated propyl, methoxy, ethoxy, and propoxy; and/or
said compound shown in formula 2 satisfies at least one of the following conditions (5) to (7):
(5) R₂₁, R₂₂, R₂₃, R₂₄ independently represent a single bond or methylene,
(6) R₂₁, R₂₂, R₂₃, and R₂₄ are not all a single bond, and
(7) one or both of R₂₁, R₂₂ are methylene, and one or both of R₂₃, R₂₄ are methylene; and/or
said compound shown in formula 3 satisfies at least one of the following conditions (8) to (10):
(8) R₃₁, R₃₂, R₃₃, and R₃₄ independently represent a single bond or methylene, and R₃₁, R₃₂, R₃₃, and R₃₄ are not all a single bond,
(9) R₃₅ is absent or represents one of a single bond, an oxygen atom, methylene, ethylene, propylene, fluorinated methylene, fluorinated ethylene, fluorinated propylene, 2-oxa-1,3-propylene, 2-oxa-1,4-butylene, 3-oxa-1,5-pentylene, and
(10) R₃₅ is absent or represents one of a single bond, methylene, ethylene, propylene, 2-oxa-1,3 -propylene.

3. The secondary battery as claimed in claim 1 or 2, wherein R₃₁, R₃₂, R₃₃, R₃₄, and R₃₅ satisfy any one of the following conditions (1) to (6):
(1) R₃₅ is a single bond, one or both of R₃₁ and R₃₂ are methylene, and the remaining substituents are a single bond, and
(2) R₃₅ is a single bond, one or both of R₃₃ and R₃₄ are methylene, and the remaining substituents are a single bond, and
(3) R₃₅ is a single bond, one of R₃₁ and R₃₂ is methylene, one of R₃₃ and R₃₄ is methylene, and the remaining substituents are a single bond, and
(4) R₃₅ is a single bond, one of R₃₁ and R₃₂ is methylene, one of R₃₃ and R₃₄ is methylene, and the remaining substituents are a single bond, and
(5) R₃₅ is a single bond, R₃₃ and R₃₄ are both methylene, one of R₃₁ and R₃₂ is methylene, and the remaining substituents are a single bond, and
(6) R₃₅ is a single bond, R₃₁, R₃₂, R₃₃, R₃₄ are all methylene.

4. The secondary battery as claimed in any one of claims 1 to 3, wherein said first additive comprises at least one of the following compounds:

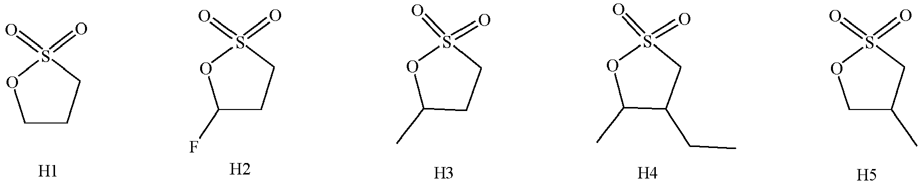

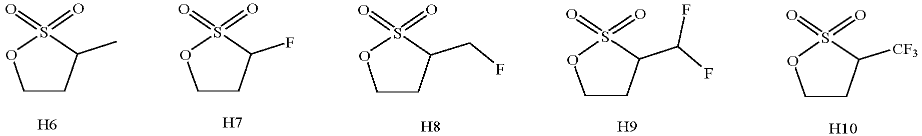

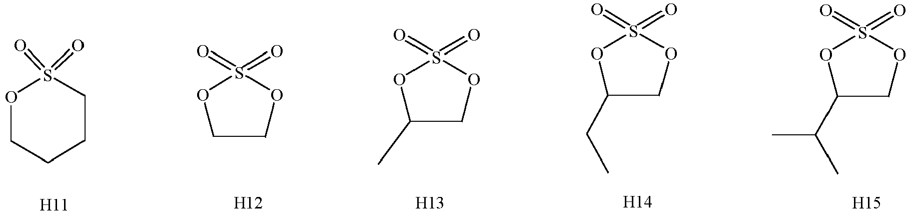

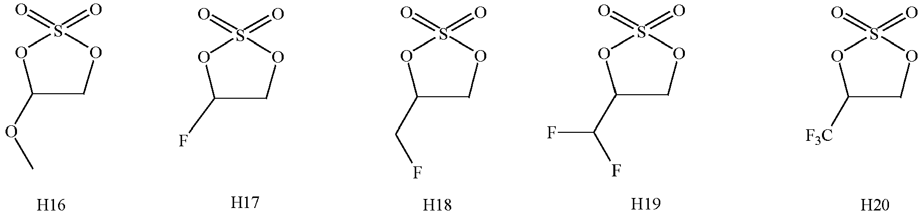

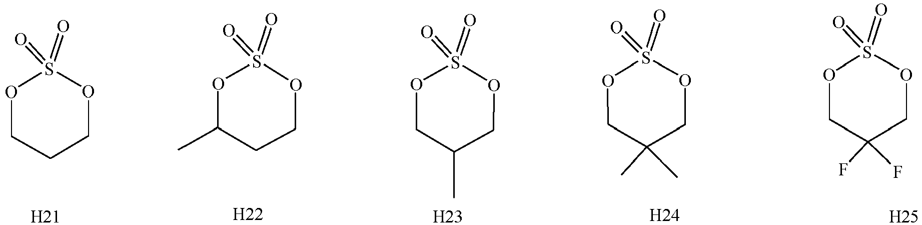

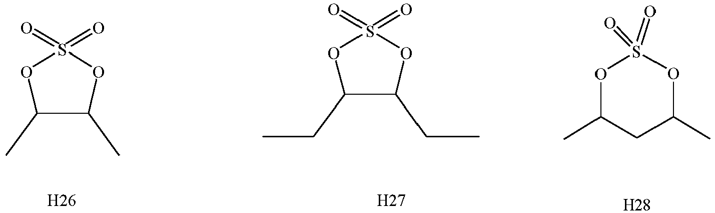

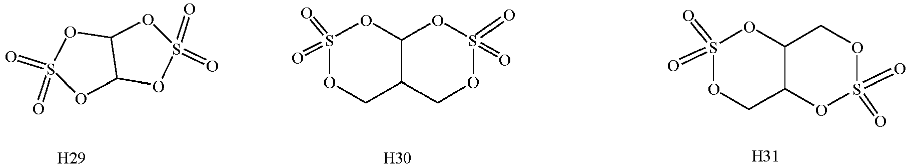

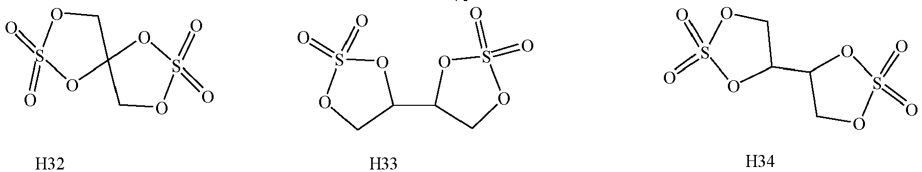

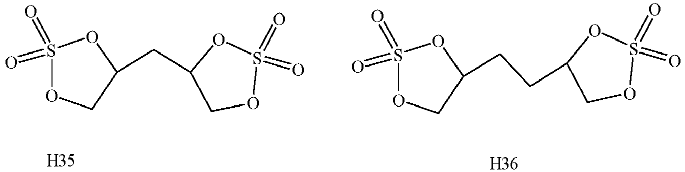

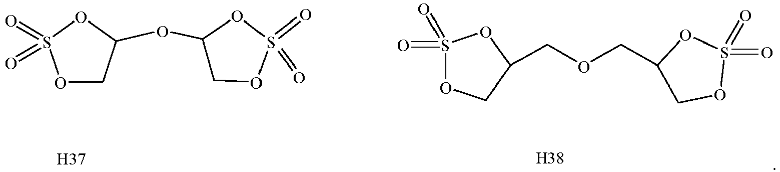

5. The secondary battery as claimed in any one of claims 1 to 4, wherein
said first additive is present in an amount of W1% by weight, with W1 being 0.01 to 20, optionally 0.1 to 10, more optionally 0.5 to 5, based on the total weight of said non-aqueous electrolytic solution; and/or
said first cladding layer has a cladding amount of C1% by weight, with C1 being greater than 0 wt% and less than or equal to 7 wt%, optionally of from 4 wt% to 5.6 wt%, based on the weight of said core; and/or
said second cladding layer has a cladding amount of C2% by weight, with C2 being greater than 0 wt% and less than or equal to 6 wt%, optionally of from 3 wt% to 5 wt%, based on the weight of said core.

6. The secondary battery as claimed in any one of claims 1 to 5, wherein W1/(C1+C2) is 0.001 to 2, optionally 0.01 to 1, and more optionally 0.05 to 1.

7. The secondary battery as claimed in any one of claims 1 to 6, wherein the non-aqueous electrolytic solution further includes a second additive, and the second additive comprises one or more of a cyclic carbonate compound containing unsaturated bonds, a halogenated cyclic carbonate compound, a nitrile compound, a phosphonitrile compound, an aromatic hydrocarbon and halogenated aromatic hydrocarbon compound, an anhydride compound, a phosphite ester compound, a phosphate ester compound, a borate ester compound, a sulfite ester compound, a methylene disulfonate compound, and an isocyanate compound.

8. The secondary battery as claimed in any one of claims 1 to 7, wherein
in said core, a ratio of y to 1-y is from 1:10 to 10:1, optionally from 1:4 to 1:1; and/or
in said core, a ratio of z to 1-z is from 1:9 to 1:999, optionally from 1:499 to 1:249.

9. The secondary battery as claimed in any one of claims 1 to 8, wherein said A is at least two elements selected from Fe, Ti, V, Ni, Co, and Mg.

10. The secondary battery as claimed in any one of claims 1 to 9, wherein said first cladding layer satisfies at least one of the following conditions (1) to (4):
(1) said first cladding layer contains phosphate salts having a crystal plane spacing of 0.345 nm to 0.358 nm, and a crystal orientation (111) angle of 24.25° to 26.45°;
(2) said first cladding layer contains pyrophosphate salts having a crystal plane spacing of 0.293 nm to 0.326 nm, and a crystal orientation (111) angle of from 26.41° to 32.57°;
(3) a weight ratio of pyrophosphate salts and phosphate salts in said first cladding layer is from 1:3 to 3:1, optionally from 1:3 to 1:1; and
(4) pyrophosphate salts and the phosphate salts each independently has a crystallinity of from 10% to 100%, optionally from 50% to 100%.

11. The secondary battery as claimed in any one of claims 1 to 10, wherein said positive electrode active material satisfies at least one of the following conditions (1) to (5):
(1) said positive electrode active material has a Li/Mn anti-site defect concentration of 4% or less, optionally of 2% or less;
(2) said positive electrode active material has a lattice variability of 6% or less, optionally of 4% or less;
(3) said positive electrode active material has a surface oxygen valence of -1.88 or less, optionally -1.89 to -1.98;
(4) said positive electrode active material has a compaction density of 2.0 g/cm³ or more, optionally 2.2 g/cm³ or more, at 3 tonnes; and
(5) said positive electrode active material has a specific surface area of B in m²/g, with B being in the range of 7 to 18, optionally 10 to 15.

12. A battery module, comprising the secondary battery according to any one of claims 1 to 11.

13. A battery pack, comprising the battery module according to claim 12.

14. An electrical device comprising at least one of the secondary battery according to any one of claims 1 to 11, the battery module according to claim 12 or the battery pack according to claim 13.
